# EUROPEAN PATENT APPLICATION

(11) **EP 4 734 569 A1**
(43) Date of publication of application: **29.04.2026**
(21) Application number: 24850903.6
(22) Date of filing: 01.08.2024
(51) Int. Cl.: H04W 4/70

(54) **METHOD AND APPARATUS FOR TRANSMITTING INFORMATION**

(30) Priority: 10.08.2023 CN 202311006063; 14.09.2023 CN 202311194517
(71) Applicant: Huawei Technologies Co., Ltd., Shenzhen, Guangdong 518129 (CN)
(72) Inventor: YAO, Chuting, Shenzhen, Guangdong 518129 (CN); ZHANG, Mengchen, Shenzhen, Guangdong 518129 (CN); GUO, Yinghao, Shenzhen, Guangdong 518129 (CN); XU, Haibo, Shenzhen, Guangdong 518129 (CN)
(74) Representative: Pfenning, Meinig & Partner mbB
(86) International application number: PCT/CN2024/109237
(87) International publication number: WO 2025/031258

(57) **Abstract**

This application provides an information transmission method and an apparatus, to determine that a first sidelink grant is used to transmit information to a first destination address in at least one destination address, where the first destination address has first information with a highest priority in the at least one destination address, so that information transmission reliability can be improved. The method includes: A first terminal apparatus selects, from at least one destination address, a first destination address associated with a first sidelink grant, where the first destination address has first information with a highest priority in the at least one destination address, and one of the at least one destination address has an SL-PRS, or one of the at least one destination address has an SL-PRS and second information. The first terminal apparatus transmits, to the first destination address in the first sidelink grant, the first information and/or a data packet corresponding to the first information.

## Description

This application claims priorities to Chinese Patent Application No. 202311006063.3, filed on August 10, 2023 and entitled "INFORMATION TRANSMISSION METHOD AND APPARATUS", and to Chinese Patent Application No. 202311194517.4, filed on September 14, 2023 and entitled "INFORMATION TRANSMISSION METHOD AND APPARATUS", both of which are incorporated herein by reference in their entireties.

### TECHNICAL FIELD

This application relates to the communication field, and more specifically, to an information transmission method and an apparatus.

### BACKGROUND

To satisfy a requirement in an indoor or inter-vehicle positioning scenario, positioning based on a sidelink (sidelink, SL) between terminal apparatuses is introduced in 3rd generation partnership project (3rd generation partnership project, 3GPP) R18. In an SL positioning scenario, a sidelink positioning reference signal (sidelink positioning reference signal, SL-PRS) may need to be transmitted between terminal apparatuses, positioning-related information, for example, positioning-related assistance data, capability information, SL-PRS configuration information, a measurement result, location information, and connection control information, may further need to be transmitted, and other data information may further need to be transmitted.

In the SL positioning scenario, because the SL-PRS needs to be transmitted between the terminal apparatuses, the terminal apparatus may perform transmission of the SL-PRS by using a sidelink grant (SL grant) resource in an SL-PRS dedicated resource pool, or the terminal apparatus may perform transmission of the SL-PRS by using a sidelink grant resource in a shared resource pool. The SL-PRS dedicated resource pool is a resource pool specially for the transmission of the SL-PRS. The shared resource pool is a resource pool available for transmission of data in addition to the SL-PRS.

For an SL grant in the dedicated resource pool, when an SL-PRS needs to be transmitted to a plurality of destination addresses, how to determine a specific destination address to which the SL grant is used to transmit the SL-PRS in the plurality of destination addresses needs to be urgently resolved. In addition, for an SL grant in the shared resource pool, data and an SL-PRS may be transmitted together. When the data and/or the SL-PRS need/needs to be transmitted to a plurality of destination addresses, how to determine a specific destination address to which the SL grant is used to transmit the data and/or the SL-PRS in the plurality of destination addresses, and how to perform packet assembly of a media access control (media access control, MAC) protocol data unit (protocol data unit, PDU) need to be urgently resolved.

### SUMMARY

This application provides an information transmission method and an apparatus, to determine that a first sidelink grant is used to transmit information to a first destination address in at least one destination address, where the first destination address has first information with a highest priority in the at least one destination address, so that information transmission reliability can be improved.

According to a first aspect, an information transmission method is provided. The method may be performed by a first terminal apparatus or a chip or a chip system in the first terminal apparatus. The method includes: The first terminal apparatus selects, from at least one destination address, a first destination address associated with a first sidelink grant, where the first destination address has first information with a highest priority in the at least one destination address, and one of the at least one destination address has a sidelink positioning reference signal SL-PRS, or one of the at least one destination address has an SL-PRS and second information, where the second information includes one or two of a media access control control element MAC CE and a logical channel. The first terminal apparatus transmits, to a second terminal apparatus in the first sidelink grant, the first information and/or a data packet corresponding to the first information, where an address of the second terminal apparatus is the first destination address.

Based on the foregoing technical solution, the first terminal apparatus may determine, from the at least one destination address based on a priority of the SL-PRS, the MAC CE, and/or the logical channel, that the first destination address is associated with the first sidelink grant, where the first destination address has the first information with the highest priority. In the first sidelink grant, the first terminal apparatus transmits, to the second terminal apparatus corresponding to the first destination address, the first information and/or the data packet corresponding to the first information. In this technical solution, it may be determined that the first destination address is associated with the first sidelink grant, and the first destination address has the first information with the highest priority in the at least one destination address. In this way, the first information with the highest priority can be preferentially transmitted in the first sidelink grant, thereby improving information transmission reliability.

In a design of this application, the method further includes: determining the at least one destination address based on the first sidelink grant. It may be understood that the first sidelink grant has a requirement on information whose transmission is supported, and the first destination address needs to be selected from destination addresses corresponding to the information that satisfies the requirement. For example, the at least one destination address is determined based on whether the first sidelink grant supports transmission of the SL-PRS. Alternatively, the at least one destination address is determined based on a priority list of the SL-PRS supported by the first sidelink grant. Alternatively, the at least one destination address is determined based on a time requirement of the first sidelink grant on information transmission.

In a design of this application, the method further includes: determining, when the first destination address has the SL-PRS and the first information is not the SL-PRS, whether to transmit the SL-PRS in the first sidelink grant. That the first destination address has the SL-PRS may be understood as that information that needs to be transmitted to the first destination address includes the SL-PRS. When the first destination address has the SL-PRS and the first information is not the SL-PRS, the priority of the first information is higher than a priority of the SL-PRS, and the first information is the MAC CE or the logical channel.

In a design of this application, the determining, when the first destination address has the SL-PRS and the first information is not the SL-PRS, whether to transmit the SL-PRS in the first sidelink grant includes: when the first destination address has the SL-PRS and the first information is not the SL-PRS, determining to transmit the SL-PRS in the first sidelink grant. In this implementation, if the first destination address has a requirement for transmitting the SL-PRS, a MAC layer of the first terminal apparatus determines to transmit the SL-PRS in the first sidelink grant.

In a design of this application, the determining, when the first destination address has the SL-PRS and the first information is not the SL-PRS, whether to transmit the SL-PRS in the first sidelink grant includes: when the first destination address has the SL-PRS and the first information is not the SL-PRS, determining not to transmit the SL-PRS in the first sidelink grant. Specifically, if the priority of the first information is higher than or equal to a priority of the SL-PRS, a MAC layer of the first terminal apparatus determines not to transmit the SL-PRS in the first sidelink grant; or if a priority of the SL-PRS is higher than or equal to the priority of the first information, a MAC layer of the first terminal apparatus determines to transmit the SL-PRS in the first sidelink grant. In this implementation, because the priority of the first information is higher than the priority of the SL-PRS, the MAC layer of the first terminal apparatus determines not to transmit the SL-PRS in the first sidelink grant.

In a design of this application, the determining, when the first destination address has the SL-PRS and the first information is not the SL-PRS, whether to transmit the SL-PRS in the first sidelink grant includes: when the first destination address has the SL-PRS and the first information is not the SL-PRS, determining, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

In a design of this application, it is determined to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or it is determined not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than the size of the transmission resource of the first sidelink grant. The information whose priority is higher than the priority of the SL-PRS in the first destination address may be understood as the information whose priority is higher than the priority of the SL-PRS in the information that needs to be transmitted to the first destination address.

In a design of this application, transmitting, to the second terminal apparatus in the first sidelink grant, the first information and/or the data packet corresponding to the first information includes: when the first destination address has the SL-PRS, the first information is not the SL-PRS, and it is determined to transmit the SL-PRS in the first sidelink grant, transmitting, to the second terminal apparatus in the first sidelink grant, the data packet corresponding to the first information and the SL-PRS; or when the first destination address has the SL-PRS, the first information is not the SL-PRS, and it is determined not to transmit the SL-PRS in the first sidelink grant, transmitting, to the second terminal apparatus in the first sidelink grant, the data packet corresponding to the first information; or when the first information is the SL-PRS, transmitting, to the second terminal apparatus in the first sidelink grant, the SL-PRS and a data packet corresponding to third information, where the third information includes a part or entirety of information other than the SL-PRS in the first destination address; or when the first information is the SL-PRS, transmitting, to the second terminal apparatus in the first sidelink grant, the SL-PRS and a data packet corresponding to the SL-PRS; or when the first information is the SL-PRS, transmitting the SL-PRS to the second terminal apparatus in the first sidelink grant.

In a design of this application, the data packet corresponding to the SL-PRS does not include a MAC service data unit SDU or a MAC CE; or the data packet corresponding to the SL-PRS includes a MAC protocol data unit PDU subheader; or the data packet corresponding to the SL-PRS includes a MAC PDU subheader and a padding bit; or the data packet corresponding to the SL-PRS includes a MAC CE associated with the SL-PRS.

In a design of this application, the method further includes: obtaining the first sidelink grant.

In a design of this application, the obtaining the first sidelink grant includes: receiving configuration information from a network device, where the configuration information indicates the first sidelink grant.

In a design of this application, the configuration information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; periodicity information of the first sidelink grant; or information about a quantity of time-domain symbols occupied by an SL-PRS whose transmission is supported by the first sidelink grant.

In a design of this application, the obtaining the first sidelink grant includes: sending fourth information to a network device, where the fourth information is for requesting to obtain a sidelink grant available for transmission of an SL-PRS; and receiving fifth information from the network device, where the fifth information indicates the first sidelink grant.

In a design of this application, the fourth information or the fifth information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; information about a quantity of time-domain symbols occupied by an SL-PRS whose transmission is supported by the first sidelink grant; index information corresponding to the first sidelink grant; index information of a resource pool that the first sidelink grant is in; or experience requirement information of a positioning service supported by the first sidelink grant.

In a design of this application, the method further includes: The first terminal apparatus receives a first uplink grant. The first terminal apparatus determines, based on the priority of the SL-PRS in the first destination address, whether transmission in the first sidelink grant takes precedence over transmission in the first uplink grant.

In a design of this application, the method further includes: The first terminal apparatus receives a first SL priority threshold. That the first terminal apparatus determines, based on the priority of the SL-PRS in the first destination address, whether transmission in the first sidelink grant takes precedence over transmission in the first uplink grant includes: if the priority of the SL-PRS in the first destination address is higher than or equal to the first SL priority threshold, determining that the transmission in the first sidelink grant takes precedence over the transmission in the first uplink grant; or if the priority of the SL-PRS in the first destination address is lower than or equal to the first SL priority threshold, determining that the transmission in the first uplink grant takes precedence over the transmission in the first sidelink grant, or determining that the transmission in the first sidelink grant does not take precedence over the transmission in the first uplink grant.

In a design of this application, sending time corresponding to the first uplink grant is the same as or close to sending time corresponding to the first sidelink grant.

In a design of this application, the first terminal apparatus does not have a capability of simultaneously using the first uplink grant and the first sidelink grant.

In a design of this application, the method further includes: Before the first terminal apparatus sends the fourth information to the network device, the first terminal apparatus device receives sixth information sent by the network device.

In a design of this application, the method further includes: the sixth information includes one or more of the following: an index of a resource pool that the first sidelink grant is in; information about a sidelink transmission time-frequency resource of the first sidelink grant; periodicity information of the first sidelink grant; the first sidelink grant being a sidelink transmission resource of a configured grant type 2 (configured grant type 2); or an active state of the first sidelink grant.

In a design of this application, the method further includes: When the first grant is the sidelink transmission resource of the configured grant type 2, the fourth information is used by the first terminal apparatus for requesting to activate or deactivate the first sidelink grant.

In a design of this application, the method further includes: When the first grant is the sidelink transmission resource of the configured grant type 2, the fifth information is used by the network device to activate or deactivate the first sidelink grant.

According to a second aspect, an information transmission method is provided. The method may be performed by a network device or a chip or a chip system in the network device. The method includes: The network device sends configuration information to a first terminal apparatus, where the configuration information indicates a first sidelink grant.

In a design of this application, the configuration information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; periodicity information of the first sidelink grant; or information about a quantity of time-domain symbols occupied by an SL-PRS whose transmission is supported by the first sidelink grant.

According to a third aspect, an information transmission method is provided. The method may be performed by a network device or a chip or a chip system in the network device. The method includes: The network device receives fourth information from a first terminal apparatus, where the fourth information is for requesting to obtain a sidelink grant available for transmission of an SL-PRS. The network device sends fifth information to the first terminal apparatus, where the fifth information indicates a first sidelink grant.

In a design of this application, the fourth information or the fifth information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; information about a quantity of time-domain symbols occupied by an SL-PRS whose transmission is supported by the first sidelink grant; index information corresponding to the first sidelink grant; index information of a resource pool that the first sidelink grant is in; or experience requirement information of a positioning service supported by the first sidelink grant.

In a design of this application, the method further includes: Before receiving the fourth information of the first terminal apparatus, the network device sends sixth information to the first terminal apparatus device.

In a design of this application, the method further includes: the sixth information includes one or more of the following: an index of a resource pool that the first sidelink grant is in; information about a sidelink transmission time-frequency resource of the first sidelink grant; periodicity information of the first sidelink grant; the first sidelink grant being a sidelink transmission resource of a configured grant type 2 (configured grant type 2); or an active state of the first sidelink grant.

In a design of this application, the method further includes: When the first grant is the sidelink transmission resource of the configured grant type 2, the fourth information is used by the first terminal apparatus for requesting to activate or deactivate the first sidelink grant.

In a design of this application, the method further includes: When the first grant is the sidelink transmission resource of the configured grant type 2, the fifth information is used by the network device to activate or deactivate the first sidelink grant.

According to a fourth aspect, a rule indicating that a MAC PDU cannot be generated is provided, including: A MAC layer of a first terminal apparatus is not allowed to generate the MAC PDU when the following conditions are satisfied:
there is no sidelink CSI reporting MAC CE generated for this physical sidelink shared channel (physical sidelink shared channel, PSSCH) transmission;
there is no sidelink DRX command MAC CE generated for this PSSCH transmission;
there is no sidelink inter-terminal apparatus coordination request MAC CE generated for this PSSCH transmission;
there is no sidelink inter-terminal apparatus coordination information MAC CE generated for this PSSCH transmission;
there is no MAC CE associated with the SL-PRS generated for this PSSCH transmission;
the MAC PDU includes zero MAC SDUs; and
if the first terminal apparatus needs to transmit, to a second terminal apparatus, an SL-PRS and a MAC CE associated with the SL-PRS, and the MAC layer of the first terminal apparatus is allowed to generate the MAC PDU, the first terminal apparatus transmits, to the second terminal apparatus in a sidelink grant, the SL-PRS and a data packet corresponding to the SL-PRS.

According to a fifth aspect, a rule indicating that a MAC PDU cannot be generated is provided, including: A MAC layer of a first terminal apparatus is not allowed to generate the MAC PDU when the following conditions are satisfied:
there is no sidelink CSI reporting MAC CE generated for this PSSCH transmission;
there is no sidelink DRX command MAC CE generated for this PSSCH transmission;
there is no sidelink inter-terminal apparatus coordination request MAC CE generated for this PSSCH transmission;
there is no sidelink inter-terminal apparatus coordination information MAC CE generated for this PSSCH transmission;
the MAC PDU includes zero MAC SDUs, and the MAC PDU is not associated with an SL-PRS; and
if the first terminal apparatus needs to transmit an SL-PRS to a second terminal apparatus, but does not need to transmit a MAC CE and a logical channel to the second terminal apparatus, and the MAC layer of the first terminal apparatus is allowed to generate the MAC PDU, the first terminal apparatus transmits, to the second terminal apparatus in a sidelink grant, the SL-PRS and the MAC PDU including a MAC PDU subheader or a MAC PDU subheader and a padding bit.

According to a sixth aspect, an information transmission method is provided. The method may be performed by a first terminal apparatus or a chip or a chip system in the first terminal apparatus. The method includes: The first terminal apparatus obtains a first sidelink grant, where the first sidelink grant is used to transmit an SL-PRS to a first destination address. The first terminal apparatus receives a first uplink grant. The first terminal apparatus determines, based on a priority of the SL-PRS in the first destination address, whether transmission in the first sidelink grant takes precedence over transmission in the first uplink grant.

Based on the foregoing technical solution, when uplink transmission and sidelink SL-PRS transmission coexist, whether the transmission in the first sidelink grant takes precedence over the transmission in the first uplink grant may be determined based on the priority of the SL-PRS in the first destination address, to resolve a conflict between the uplink transmission and the sidelink SL-PRS transmission.

In a design of this application, sending time corresponding to the first uplink grant is the same as or close to sending time corresponding to the first sidelink grant.

In a design of this application, the method further includes: The first terminal apparatus receives a first SL priority threshold. That the first terminal apparatus determines, based on the priority of the SL-PRS in the first destination address, whether transmission in the first sidelink grant takes precedence over transmission in the first uplink grant includes: If the priority of the SL-PRS in the first destination address is higher than or equal to the first SL priority threshold, the first terminal apparatus determines that the transmission in the first sidelink grant takes precedence over the transmission in the first uplink grant; or if the priority of the SL-PRS in the first destination address is lower than or equal to the first SL priority threshold, determines that the transmission in the first uplink grant takes precedence over the transmission in the first sidelink grant, or determines that the transmission in the first sidelink grant does not take precedence over the transmission in the first uplink grant.

In a design of this application, the first terminal apparatus does not have a capability of simultaneously using the first uplink grant and the first sidelink grant.

According to a seventh aspect, a communication apparatus is provided. The apparatus may be used in the first terminal apparatus according to the first aspect, and the apparatus includes: a processing unit, configured to select, from at least one destination address, a first destination address associated with a first sidelink grant, where the first destination address has first information with a highest priority in the at least one destination address, and one of the at least one destination address has a sidelink positioning reference signal SL-PRS, or one of the at least one destination address has an SL-PRS and second information, where the second information includes one or two of a media access control control element MAC CE and a logical channel; and a transceiver unit, configured to transmit, to a second terminal apparatus in the first sidelink grant, the first information and/or a data packet corresponding to the first information, where an address of the second terminal apparatus is the first destination address.

In a design of this application, the processing unit is further configured to determine, when the first destination address has the SL-PRS and the first information is not the SL-PRS, whether to transmit the SL-PRS in the first sidelink grant.

In a design of this application, when the first destination address has the SL-PRS and the first information is not the SL-PRS, the processing unit is specifically configured to determine to transmit the SL-PRS in the first sidelink grant.

In a design of this application, when the first destination address has the SL-PRS and the first information is not the SL-PRS, the processing unit is specifically configured to determine not to transmit the SL-PRS in the first sidelink grant.

In a design of this application, when the first destination address has the SL-PRS and the first information is not the SL-PRS, the processing unit is specifically configured to determine, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

In a design of this application, the processing unit is specifically configured to: determine to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or determine not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than the size of the transmission resource of the first sidelink grant.

In a design of this application, the transceiver unit is specifically configured to: when the first destination address has the SL-PRS, the first information is not the SL-PRS, and it is determined to transmit the SL-PRS in the first sidelink grant, transmit, to the second terminal apparatus in the first sidelink grant, the data packet corresponding to the first information and the SL-PRS; or when the first destination address has the SL-PRS, the first information is not the SL-PRS, and it is determined not to transmit the SL-PRS in the first sidelink grant, transmit, to the second terminal apparatus in the first sidelink grant, the data packet corresponding to the first information; or when the first information is the SL-PRS, transmit, to the second terminal apparatus in the first sidelink grant, the SL-PRS and a data packet corresponding to third information, where the third information includes a part or entirety of information other than the SL-PRS in the first destination address; or when the first information is the SL-PRS, transmit, to the second terminal apparatus in the first sidelink grant, the SL-PRS and a data packet corresponding to the SL-PRS; or when the first information is the SL-PRS, transmit the SL-PRS to the second terminal apparatus in the first sidelink grant.

In a design of this application, the data packet corresponding to the SL-PRS does not include a MAC service data unit SDU or a MAC CE; or the data packet corresponding to the SL-PRS includes a MAC protocol data unit PDU subheader; or the data packet corresponding to the SL-PRS includes a MAC PDU subheader and a padding bit; or the data packet corresponding to the SL-PRS includes a MAC CE associated with the SL-PRS.

In a design of this application, the transceiver unit is further configured to obtain the first sidelink grant.

In a design of this application, the transceiver unit is specifically configured to receive configuration information from a network device, where the configuration information indicates the first sidelink grant.

In a design of this application, the configuration information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; or information about a quantity of time-domain symbols occupied by an SL-PRS whose transmission is supported by the first sidelink grant.

In a design of this application, the transceiver unit is specifically configured to: send fourth information to a network device, where the fourth information is for requesting to obtain a sidelink grant available for transmission of an SL-PRS; and receive fifth information from the network device, where the fifth information indicates the first sidelink grant.

In a design of this application, the fifth information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; information about a quantity of time-domain symbols occupied by an SL-PRS whose transmission is supported by the first sidelink grant; or experience requirement information of a positioning service supported by the first sidelink grant.

According to an eighth aspect, a communication apparatus is provided. The apparatus may be used in the network device according to the second aspect, and the apparatus includes: a transceiver unit, configured to send configuration information to a first terminal apparatus, where the configuration information indicates a first sidelink grant.

In a design of this application, the configuration information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; or information about a quantity of time-domain symbols occupied by an SL-PRS whose transmission is supported by the first sidelink grant.

According to a ninth aspect, a communication apparatus is provided. The apparatus may be used in the network device according to the third aspect, and the apparatus includes: a transceiver unit, configured to receive fourth information from a first terminal apparatus, where the fourth information is for requesting to obtain a sidelink grant available for transmission of an SL-PRS. The transceiver unit is further configured to send fifth information to the first terminal apparatus, where the fifth information indicates a first sidelink grant.

In a design of this application, the fifth information includes one or more of the following: priority information of information whose transmission is supported by the first sidelink grant; priority information of an SL-PRS whose transmission is supported by the first sidelink grant; requested bandwidth information of an SL-PRS whose transmission is supported by the first sidelink grant; information about a quantity of time-domain symbols occupied by an SL-PRS whose transmission is supported by the first sidelink grant; or experience requirement information of a positioning service supported by the first sidelink grant.

According to a tenth aspect, a communication apparatus is provided, including at least one processor. The at least one processor is connected to a memory, the memory is configured to store a computer program, and the at least one processor is configured to execute the computer program stored in the memory, so that the method in any one of the first aspect to the third aspect or the possible implementations of the first aspect to the third aspect is performed by the communication apparatus.

According to an eleventh aspect, a communication system is provided, including the first terminal apparatus in the method according to the first aspect, another communication device communicating with the first terminal apparatus, the network device in the method according to the second aspect or the third aspect, and another communication device communicating with the network device.

According to a twelfth aspect, a computer-readable storage medium is provided. The computer-readable medium stores computer code or instructions. When the computer code or the instructions are run by a processor, the method in any one of the first aspect to the third aspect and the possible implementations of the first aspect to the third aspect is performed.

According to a thirteenth aspect, a computer program product is provided, including computer code or instructions. When the computer code or the instructions are executed, the method in any one of the first aspect to the third aspect and the possible implementations of the first aspect to the third aspect is implemented.

The solutions provided in the seventh aspect to the thirteenth aspect are used to implement or cooperatively implement the methods provided in the first aspect to the sixth aspect, and therefore can achieve beneficial effects the same as or corresponding to those achieved by the first aspect to the sixth aspect. Details are not described herein again.

### BRIEF DESCRIPTION OF DRAWINGS

FIG. 1 is a diagram of performing positioning between terminal apparatuses;
FIG. 2 is a diagram of a system architecture to which an embodiment of this application is applicable;
FIG. 3 is a schematic flowchart of performing packet assembly of a MAC PDU based on a priority of a logical channel;
FIG. 4 is an interaction flowchart of an information transmission method according to an embodiment of this application;
FIG. 5 is an interaction flowchart of an example of an information transmission method according to an embodiment of this application;
FIG. 6 is an interaction flowchart of another example of an information transmission method according to an embodiment of this application;
FIG. 7 is a block diagram of a communication apparatus according to an embodiment of this application; and
FIG. 8 is a block diagram of another communication apparatus according to an embodiment of this application.

### DESCRIPTION OF EMBODIMENTS

The following describes technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access (code division multiple access, CDMA2000) 2000 system, a time division-synchronous code division multiple access (time division-synchronous code division multiple access, TD-SCDMA) system, a long term evolution (long term evolution, LTE) system, satellite communication, a sidelink (sidelink, SL), a fourth generation (fourth generation, 4G) system, a 5th generation (5th generation, 5G) system, or a new communication system that appears in the future. The communication system includes communication devices, and wireless communication may be performed between the communication devices by using an air interface resource. The communication device may include a network device and a terminal apparatus, and the network device may also be referred to as a base station device. The air interface resource may include at least one of a time-domain resource, a frequency-domain resource, a code resource, and a spatial resource.

The terminal apparatus in embodiments of this application may include various handheld devices, vehicle-mounted devices, wearable devices, or computing devices that have a wireless communication function, or other processing devices connected to a wireless modem. The terminal apparatus may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modulator-demodulator (modulator-demodulator, modem), a laptop computer (laptop computer), a machine type communication (machine type communication, MTC) terminal, a wireless terminal in self driving (self driving), or the like. The user equipment includes vehicle user equipment. With emergence of internet of things (internet of things, IoT) technologies, more devices that previously do not have a communication function, for example, but not limited to, a household appliance, a transportation vehicle, a tool device, a service device, and a service facility, start to obtain a wireless communication function by being configured with a wireless communication unit, to access a wireless communication network to accept remote control. Such a device has a wireless communication function because the device is configured with the wireless communication unit, and therefore also belongs to a scope of wireless communication devices. In addition, the terminal apparatus may also be referred to as a mobile station (mobile station, MS), a mobile device, a mobile terminal, a wireless terminal, a handheld device (handset), a client, a virtual reality (virtual reality, VR) terminal apparatus, an augmented reality (augmented reality, AR) terminal apparatus, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal apparatus may be a terminal apparatus, or may be an apparatus that can support the terminal apparatus in implementing the function, for example, a chip system. The apparatus may be installed in the terminal apparatus. In embodiments of this application, the chip system may include a chip, or may include a chip and another discrete device. The terminal apparatus provided in embodiments of this application may be a vehicle, an automobile module, an on board unit (on board unit, OBU), a telematics box (Telematics BOX, T-box), a road side unit (road side unit, RSU), or a chip, and the chip may be installed on a vehicle, or installed on an in-vehicle module or an on board unit. In the technical solutions provided in embodiments of this application, the technical solutions provided in embodiments of this application are described by using an example in which the apparatus configured to implement the function of the terminal apparatus is a terminal apparatus, and the terminal apparatus may be UE.

For example, the network device may be an access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband unit, BBU), a device that functions as a base station in a device-to-device (device-to-device, D2D), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like; may be a gNB or a transmission point (for example, a TRP or a TP) in NR, or one or a group of antenna panels (including a plurality of antenna panels) of a base station in NR; or may be a network node that forms a gNB or a transmission point, for example, a baseband unit (building baseband unit, BBU) or a distributed unit (distributed unit, DU). Alternatively, the network device may be a vehicle-mounted device, a wearable device, or a network device in a 6G network, a network device in a future evolved PLMN network, or the like; or is a network device deployed on a satellite. This is not limited. In addition, based on sizes of provided service coverage, base stations (base stations, BSs) may be classified into macro base stations for providing a macro cell (macro cell), micro base stations for providing a micro cell (pico cell), and femto base stations for providing a femto cell (femto cell), relay stations, access points, and the like. As a wireless communication technology continuously evolves, a future base station may also use another name.

To facilitate understanding of embodiments of this application, the following briefly describes technical solutions related to embodiments of this application.

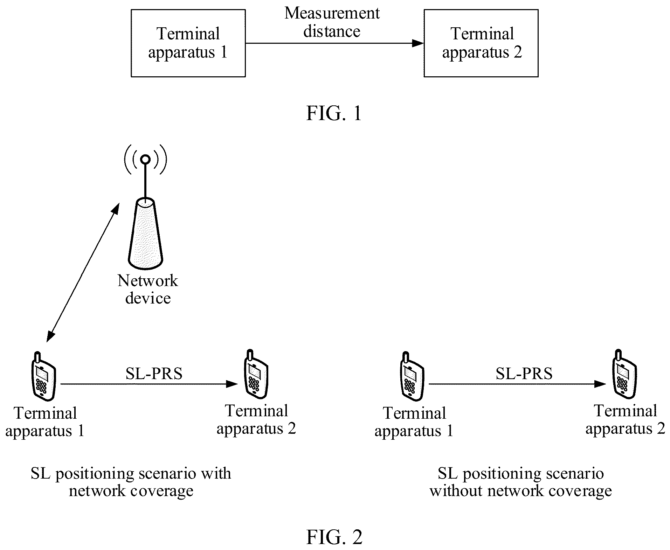

To satisfy a requirement in an indoor or inter-vehicle positioning scenario, positioning based on an SL between terminal apparatuses is introduced in 3GPP R18. FIG. 1 is a diagram of performing positioning between the terminal apparatuses. The SL positioning may be understood as introducing an SL into a positioning scenario. For example, at least one network element/terminal apparatus/entity that includes a PC5 interface and that can send a positioning reference signal is introduced into the positioning scenario. The PC5 interface is an interface between terminal apparatuses. In embodiments of this application, an example in which the positioning reference signal is an SL-PRS is used.

FIG. 2 is a diagram of a system architecture to which an embodiment of this application is applicable. This embodiment of this application is applicable to an SL positioning scenario, including an SL positioning scenario with network coverage and an SL positioning scenario without network coverage.

In the SL positioning scenario, in the SL positioning scenario, an SL-PRS needs to be transmitted between terminal apparatuses, transmission of positioning-related information, for example, positioning-related assistance data, capability information, SL-PRS configuration information, a measurement result, location information, and connection control information, may further need to be transmitted, and other data information may further need to be transmitted.

Specifically, the terminal apparatus may receive an SL-PRS sent by another terminal apparatus, and the terminal apparatus may further measure the SL-PRS sent by the another terminal apparatus, and obtain a measurement result. In positioning methods that can be used by the terminal apparatus, each positioning method has a corresponding measurement result. Optionally, the terminal apparatus that sends the SL-PRS may first determine configuration information or assistance data information of the SL-PRS, and send the SL-PRS based on the configuration information or the assistance data information of the SL-PRS. The terminal apparatus that receives the SL-PRS may first obtain the configuration information or the assistance data information of the SL-PRS, and then receive the SL-PRS based on the configuration information or the assistance data information of the SL-PRS.

In the SL positioning scenario, because the SL-PRS needs to be transmitted between the terminal apparatuses, the terminal apparatus may perform transmission of the SL-PRS by using a sidelink grant (SL grant) resource in an SL-PRS dedicated resource pool, or the terminal apparatus may perform transmission of the SL-PRS by using a sidelink grant resource in a shared resource pool. The SL-PRS dedicated resource pool is a resource pool specially for the transmission of the SL-PRS. The shared resource pool is a resource pool available for transmission of data in addition to the SL-PRS. For an SL grant, a same terminal apparatus can send information to only one peer terminal apparatus. For example, for the dedicated resource pool, a same terminal apparatus may transmit an SL-PRS to a peer terminal apparatus by using an SL grant in the dedicated resource pool. For another example, for the shared resource pool, a same terminal apparatus may simultaneously transmit an SL-PRS and data to a peer terminal apparatus by using an SL grant in the shared resource pool. A same terminal apparatus may alternatively transmit an SL-PRS to a peer terminal apparatus by using an SL grant in the shared resource pool, and not transmit data. A same terminal apparatus may alternatively transmit data to a peer terminal apparatus by using an SL grant in the shared resource pool, and not transmit an SL-PRS. SL grants selected by different terminal apparatuses in the shared resource pool may be used for different purposes. For example, a terminal apparatus 1 may alternatively select an SL grant from the shared resource pool to perform transmission of an SL-PRS, and a terminal apparatus 2 selects an SL grant from the shared resource pool to perform transmission of data. Compared with the dedicated resource pool unavailable for transmission of data, the shared resource pool may be available for transmission of the SL-PRS and the data. The data in embodiments of this application includes a MAC CE and/or data corresponding to a logical channel.

For an SL grant in the dedicated resource pool, when an SL-PRS needs to be transmitted to a plurality of destination addresses, how to determine a specific destination address to which the SL grant is used to transmit the SL-PRS in the plurality of destination addresses needs to be urgently resolved. In addition, for an SL grant in the shared resource pool, data and an SL-PRS may be transmitted together. When the data and/or the SL-PRS need/needs to be transmitted to a plurality of destination addresses, how to determine a specific destination address to which the SL grant is used to transmit the data and/or the SL-PRS in the plurality of destination addresses, and how to perform packet assembly of a MAC PDU need to be urgently resolved.

Therefore, an embodiment of this application provides an information transmission method, so that after obtaining an SL grant, a first terminal apparatus can determine, based on a case in which an SL-PRS and/or data (including a MAC CE and/or data corresponding to a logical channel) need/needs to be transmitted to at least one destination address, that the SL grant is used to transmit information to a first destination address in the at least one destination address, and can determine how to perform packet assembly of a MAC PDU.

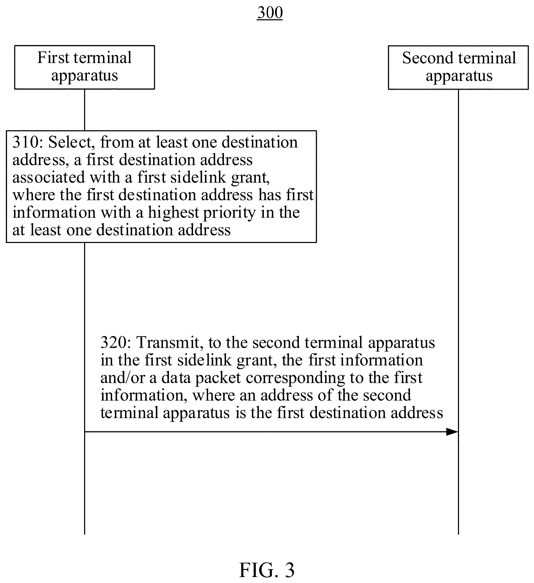

FIG. 3 is an interaction flowchart of an information transmission method 300 according to an embodiment of this application.

310: A first terminal apparatus selects, from at least one destination address, a first destination address associated with a first sidelink grant, where the first destination address has first information with a highest priority in the at least one destination address, and one of the at least one destination address has an SL-PRS, or one of the at least one destination address has an SL-PRS and second information, where the second information includes one or two of a MAC CE and a logical channel. Specifically, a MAC layer of the first terminal apparatus selects, from the at least one destination address, the first destination address associated with the first sidelink grant. The first sidelink grant is used to transmit information and/or data to a second terminal apparatus corresponding to the first destination address.

That one of the at least one destination address has an SL-PRS may be understood as that information that needs to be transmitted to one of the at least one destination address includes the SL-PRS, or one of the at least one destination address has a requirement for transmitting the SL-PRS. That one of the at least one destination address has an SL-PRS and second information may be understood as that information that needs to be transmitted to the one of the at least one destination address includes the SL-PRS and the second information, or one of the at least one destination address has a requirement for transmitting the SL-PRS and the second information. In this embodiment of this application, the second information may be understood as a data packet corresponding to the second information. For example, when the second information includes the logical channel, the logical channel is unavailable for transmission, and data on the logical channel is essentially transmitted. The logical channel may be understood as a data packet corresponding to the logical channel or the data corresponding to the logical channel.

In the at least one destination address, only one destination address may have a requirement for transmitting the SL-PRS, or each destination address may have a requirement for transmitting the SL-PRS. For example, the at least one destination address includes a destination address 1, a destination address 2, and a destination address 3, an SL-PRS needs to be transmitted to the destination address 1, a MAC CE needs to be transmitted to the destination address 2, and the MAC CE and a data packet corresponding to a logical channel need to be transmitted to the destination address 3. For another example, the at least one destination address includes a destination address 1, a destination address 2, and a destination address 3, an SL-PRS and a MAC CE need to be transmitted to the destination address 1, the MAC CE needs to be transmitted to the destination address 2, and the MAC CE and a data packet corresponding to a logical channel need to be transmitted to the destination address 3. For another example, the at least one destination address includes a destination address 1, a destination address 2, and a destination address 3, an SL-PRS 1 and a MAC CE need to be transmitted to the destination address 1, an SL-PRS 2 needs to be transmitted to the destination address 2, and an SL-PRS 3 and a data packet corresponding to a logical channel need to be transmitted to the destination address 3. For another example, the at least one destination address includes a destination address 1, a destination address 2, and a destination address 3, an SL-PRS 1 needs to be transmitted to the destination address 1, an SL-PRS 2 needs to be transmitted to the destination address 2, and an SL-PRS 3 needs to be transmitted to the destination address 3.

That the first destination address has first information with a highest priority in the at least one destination address may be understood as that information that needs to be transmitted to the first destination address includes the first information with the highest priority in information that needs to be transmitted to all destination addresses in the at least one destination address, or data corresponding to information that needs to be transmitted to the first destination address includes data corresponding to the first information with the highest priority in data corresponding to information that needs to be transmitted to all destination addresses in the at least one destination address.

For example, the first terminal apparatus compares a priority of an SL-PRS, a priority of a MAC CE, and a priority of a logical channel in the information that needs to be transmitted to all the destination addresses in the at least one destination address, to determine information with a highest priority as the first information. When the information that needs to be transmitted to the first destination address includes the first information, it is determined that the first sidelink grant is associated with the first destination address, where the first sidelink grant is used to transmit information and/or data to the first destination address. The first information may be the SL-PRS, the MAC CE, or data corresponding to the logical channel.

Specifically, the first terminal apparatus may compare all information that needs to be transmitted to the at least one destination address, to select, as the first destination address, a destination address corresponding to the first information with the highest priority. Alternatively, the first terminal apparatus may first select information with a highest priority in information that needs to be transmitted to one of the at least one destination address, and then compare priorities of information with highest priorities corresponding to all destination addresses in the at least one destination address, to determine the first destination address corresponding to the first information with the highest priority. This is not limited in this application. For example, the at least one destination address includes a destination address 1, a destination address 2, and a destination address 3, an SL-PRS 1 needs to be transmitted to the destination address 1, a MAC CE 1 needs to be transmitted to the destination address 2, and a MAC CE 2 and data corresponding to a logical channel 1 need to be transmitted to the destination address 3. If the first terminal apparatus determines that the SL-PRS 1 has a highest priority in the SL-PRS 1, the MAC CE 1, the MAC CE 2, and the logical channel 1, and the SL-PRS 1 is information in information that needs to be transmitted to the destination address 1, the first terminal apparatus determines that the first sidelink grant is associated with the destination address 1, and the SL-PRS 1 is the first information. For another example, the at least one destination address includes a destination address 1, a destination address 2, and a destination address 3, an SL-PRS 1 needs to be transmitted to the destination address 1, an SL-PRS 2 needs to be transmitted to the destination address 2, and an SL-PRS 3 needs to be transmitted to the destination address 3. If the first terminal apparatus determines that the SL-PRS 2 has a highest priority in the SL-PRS 1, the SL-PRS 2, and the SL-PRS 3, and the SL-PRS 2 is information in information that needs to be transmitted to the destination address 2, the first terminal apparatus determines that the first sidelink grant is associated with the destination address 2, and the SL-PRS 2 is the first information. For another example, the at least one destination address includes a destination address 1, a destination address 2, and a destination address 3, an SL-PRS 1 and data corresponding to a logical channel 1 need to be transmitted to the destination address 1, a MAC CE 2 needs to be transmitted to the destination address 2, and data corresponding to a logical channel 2 needs to be transmitted to the destination address 3. If the first terminal apparatus determines that the data corresponding to the logical channel 2 has a highest priority in the SL-PRS 1, the data corresponding to the logical channel 1, the MAC CE 2, and the data corresponding to the logical channel 2, and the data corresponding to the logical channel 2 is information in information that needs to be transmitted to the destination address 3, the first terminal apparatus determines that the first sidelink grant is associated with the destination address 3, and the logical channel 2 (the data corresponding to the logical channel 2) is the first information. For another example, the at least one destination address includes a destination address 1, a destination address 2, and a destination address 3, information with a highest priority in information that needs to be transmitted to the destination address 1 is an SL-PRS 1, information with a highest priority in information that needs to be transmitted to the destination address 2 is a MAC CE 1, and information with a highest priority in information that needs to be transmitted to the destination address 3 is data corresponding to a logical channel 1. If the first terminal apparatus determines that the SL-PRS 1 has the highest priority in the SL-PRS 1, the MAC CE 1, and the logical channel 1, and the SL-PRS 1 is the information in the information that needs to be transmitted to the destination address 1, the first terminal apparatus determines that the first sidelink grant is associated with the destination address 1, and the SL-PRS 1 is the first information.

The first sidelink grant may be understood as a first transmission opportunity. Optionally, the first sidelink grant is a sidelink grant in a shared resource pool, and the first sidelink grant is available for transmission of at least one of the SL-PRS, the MAC CE, or the logical channel. It may be understood that, after obtaining the first sidelink grant, the first terminal apparatus may select the first sidelink grant to transmit the at least one of the SL-PRS, the MAC CE, or the logical channel. Specifically, information transmitted in the first sidelink grant depends on a priority of information to be transmitted by the first terminal apparatus.

Optionally, the first sidelink grant is a sidelink grant in a dedicated resource pool, and the first sidelink grant is used to transmit the SL-PRS. It may be understood that, after obtaining the first sidelink grant, the first terminal apparatus may select only the first sidelink grant to transmit the SL-PRS. Specifically, information transmitted in the first sidelink grant depends on priorities of SL-PRSs to be transmitted by the first terminal apparatus.

The first terminal apparatus may determine the priority of the logical channel through pre-configuration or network side configuration. Logical channels have eight priority levels. It may be understood that the logical channels are divided into eight logical channel groups (logical channel groups, LCGs), and priority values corresponding to the eight LCGs are 1 to 8; and a smaller priority value indicates a higher priority of a corresponding logical channel. Priorities of logical channels and MAC CEs are sorted in descending order as follows:
(1) data from a sidelink control channel (sidelink control channel, SCCH);
(2) sidelink channel state information (channel state information, CSI) reporting MAC control element (control element, CE);
(3) sidelink inter-terminal apparatus coordination request MAC CE and sidelink inter-terminal apparatus coordination information MAC CE;
(4) sidelink discontinuous reception (discontinuous reception, DRX) command MAC CE; and
(5) data from any sidelink traffic channel (sidelink traffic channel, STCH).

The data from the SCCH is usually higher layer control information like PC5-S information or PC5-radio resource control (radio resource control, RRC) information. Connection control management information from the SCCH has a highest priority, the MAC CE has a second highest priority, and the data from the STCH has a third highest priority. Priority values that are of the SCCH and the MAC CE and that are indicated to a physical layer are both 1, but priorities still need to be determined based on the foregoing order.

To make the priority of the SL-PRS comparable to the priorities of the MAC CE and the logical channel, optionally, the priority of the SL-PRS may be defined in the following manners.

1. It is specified that the priority of the SL-PRS is the same as the priority of the MAC CE, and the priority of the SL-PRS is higher than a priority of the data from the STCH. The SL-PRS may have one or more priority levels. Optionally, the priority level of the SL-PRS may be related to an experience requirement of an SL positioning service. For example, the SL positioning service has a high precision requirement, a large bandwidth of the SL-PRS that needs to be transmitted, or a large quantity of time-domain symbols occupied by the SL-PRS that needs to be transmitted. In this case, the SL-PRS that needs to be sent may have a high priority. In embodiments of this application, a quantity of time-domain symbols may be understood as a quantity of time-domain resources.

For example, priorities of logical channels, MAC CEs, and an SL-PRS are sorted in descending order as follows:
(1) data from a SCCH;
(2) sidelink CSI reporting MAC CE;
(3) sidelink inter-terminal apparatus coordination request MAC CE and sidelink inter-terminal apparatus coordination information MAC CE;
(4) sidelink DRX command MAC CE;
(5) SL-PRS; and
(6) data from any STCH.

For example, when a priority value of the SL-PRS is 1, and a priority value of the data from the STCH is also 1, the priority of the SL-PRS also takes precedence over the priority of the data from the STCH. Processing manners for the priority of the SL-PRS and the priority of the MAC CE are the same. For example, when the priority value of the SL-PRS is consistent with the priority value of the STCH, the priority of the SL-PRS is higher than the priority of the STCH.

2. It is specified that priority levels of SL-PRSs are the same as or correspond to priority levels of the LCGs. For example, the priority levels of the SL-PRSs are the same as the priority levels of the LCGs, and the SL-PRSs may have eight priority levels, which are in one-to-one correspondence with the eight levels of the LCGs. Alternatively, the priority levels of the SL-PRS correspond to the priority levels of the LCGs, and one priority level in the priority levels of the SL-PRSs may correspond to a plurality priority levels in the priority levels of the LCGs. For example, the SL-PRSs may have three priority levels, where a priority level 1 of the SL-PRSs corresponds to priority levels 1, 2, and 3 of the LCGs, a priority level 2 of the SL-PRSs corresponds to priority levels 4, 5, and 6 of the LCGs, and a priority level 3 of the SL-PRS corresponds to priority levels 7 and 8 of the LCGs.

For example, priorities of logical channels, MAC CEs, and an SL-PRS are sorted in descending order as follows:
(1) data from a SCCH;
(2) sidelink CSI reporting MAC CE;
(3) sidelink inter-terminal apparatus coordination request MAC CE and sidelink inter-terminal apparatus coordination information MAC CE;
(4) sidelink DRX command MAC CE; and
(5) data from any STCH and SL-PRS.

In this case, when a priority value of the SL-PRS is 1, and both a priority value of the data from the SCCH and a priority value of the MAC CE are 1, the priority of the data from the SCCH and a priority of the MAC CE also take precedence over the priority of the SL-PRS. Processing manners for the priority of the SL-PRS and a priority of a logical channel corresponding to the data from the STCH are the same. For example, when the priority value of the SL-PRS is consistent with the priority value of the SCCH or the priority value of the MAC CCE, the priority of the SL-PRS is lower than the priority of the SCCH.

Optionally, the priority level of the SL-PRS may be related to parameters of the SL-PRS, and the parameters of the SL-PRS include a quantity of time-domain symbols occupied by the SL-PRS and a requested bandwidth of the SL-PRS. For example, the priority level of the SL-PRS is related to the quantity of time-domain symbols occupied by the SL-PRS. For example, the SL-PRSs have three priority levels, where the SL-PRS with a priority level 1 occupies four time-domain symbols, the SL-PRS with a priority level 2 occupies three time-domain symbols, and the SL-PRS with a priority level 3 occupies two time-domain symbols. For example, the priority level of the SL-PRS is related to the requested bandwidth of the SL-PRS. For example, the SL-PRSs have three priority levels, where a requested bandwidth of an SL-PRS with a priority level 1 occupies an entire bandwidth of a resource pool, a requested bandwidth of an SL-PRS with a priority level 2 occupies 1/2 of the bandwidth of the resource pool, and a requested bandwidth of an SL-PRS with a priority level 3 occupies 1/3 of the bandwidth of the resource pool. For example, the SL-PRSs have two priority levels, where a requested bandwidth of an SL-PRS with a priority level 1 is 100 MHz, and a requested bandwidth of an SL-PRS with a priority level 2 is 40 MHz. For example, the SL-PRSs have two priority levels, where a requested bandwidth range of an SL-PRS with a priority level 1 is 100 MHz to 40 MHz, and a requested bandwidth range of an SL-PRS with a priority level 2 is below 40 MHz.

Optionally, a MAC CE associated with an SL-PRS may be generated for the SL-PRS, and the MAC CE associated with the SL-PRS has a same priority as the SL-PRS. If it is specified that the priority of the SL-PRS is the same as the priority of the MAC CE, the priority of the MAC CE associated with the SL-PRS is higher than the priority of the logical channel corresponding to the data from the STCH. If it is specified that the priority of the SL-PRS is the same as or corresponds to the priority of the STCH and a priority of an LCG, the priority of the MAC CE associated with the SL-PRS is one of priorities of LCGs.

Based on the defined priority of the SL-PRS or the priority corresponding to the SL-PRS, the priorities of the SL-PRS, the MAC CE (if any), and the data corresponding to the logical channel (if any) may be compared, to determine the first information with the highest priority.

Optionally, before the first terminal apparatus selects, from the at least one destination address, the first destination address associated with the first sidelink grant, it may be understood as that before step 310, the first terminal apparatus obtains the first sidelink grant. Specifically, a MAC layer of the first terminal apparatus obtains the first sidelink grant. The first terminal apparatus obtains the first sidelink grant in the following two implementations.

In an implementation, the first terminal apparatus obtains the first sidelink grant based on configuration information of a resource pool. The resource pool includes a shared resource pool or a dedicated resource pool.

For example, a network device sends configuration information to the first terminal apparatus, where the configuration information indicates the first sidelink grant. Correspondingly, the first terminal apparatus receives the configuration information from the network device. The configuration information may be configuration information used to configure the shared resource pool, or the configuration information may be configuration information used to configure the dedicated resource pool, for the first terminal apparatus to obtain the first sidelink grant from the shared resource pool/dedicated resource pool configured by using the configuration information. The first sidelink grant is a sidelink transmission resource selected by the first terminal apparatus from the configured shared resource pool/dedicated resource pool. The configuration information may be sent by the network device to the first terminal apparatus via an RRC message or a system message.

For example, the first terminal apparatus may alternatively obtain the configuration information of the shared resource pool/dedicated resource pool via preconfigured information, for the first terminal apparatus to determine the first sidelink grant from the preconfigured shared resource pool/dedicated resource pool.

Optionally, the configuration information of the resource pool includes one or more of the following:
priority information of information whose transmission is supported;
priority information of an SL-PRS whose transmission is supported;
requested bandwidth information of an SL-PRS whose transmission is supported; or
information about a quantity of time-domain symbols occupied by an SL-PRS whose transmission is supported.

The configuration information of the resource pool may be used to configure the priority information of the information whose transmission is supported by the resource pool, and may indicate a priority range or a priority list of the information whose transmission is supported by the sidelink grant selected from the resource pool. For example, the first sidelink grant is a resource selected from the resource pool, and the first sidelink grant supports only transmission of information whose priority is lower than or equal to a first threshold, where the first threshold may be indicated by the network device to the first terminal apparatus, or the first threshold may be predefined. For another example, the first sidelink grant is a resource selected from the resource pool, and the first sidelink grant supports only transmission of information whose priority is included in a priority list, where the priority list may be indicated by the network device to the first terminal apparatus, or the priority list may be predefined. For another example, the first sidelink grant is a resource selected from the resource pool, and the first sidelink grant may alternatively support only transmission of information whose priority is higher than or equal to a first threshold, or the first sidelink grant may support only transmission of information whose priority is higher than or equal to a first threshold and lower than or equal to a second threshold, where a priority corresponding to the first threshold is lower than a priority corresponding to the second threshold. This is not limited in embodiments of this application.

The configuration information of the resource pool may be used to configure the priority information of an SL-PRS whose transmission is supported the resource pool, and may indicate a priority range or a priority list of the SL-PRS whose transmission is supported by the sidelink grant selected from the resource pool. For example, the first sidelink grant is a resource selected from the resource pool, and the first sidelink grant supports only transmission of an SL-PRS whose priority is equal to a third threshold, where for example, a priority value of the SL-PRS whose transmission is supported by the first sidelink grant is 3. For another example, the first sidelink grant is a resource selected from the resource pool, and the first sidelink grant supports only transmission of an SL-PRS whose priority is lower than or equal to a third threshold, where the third threshold may be indicated by the network device to the first terminal apparatus, or the third threshold may be predefined. For another example, the first sidelink grant is a resource selected from the resource pool, and the first sidelink grant supports only transmission of an SL-PRS whose priority is included in a priority list, where the priority list may be indicated by the network device to the first terminal apparatus, or the priority list may be predefined. For another example, the first sidelink grant is a resource selected from the resource pool, and the first sidelink grant may alternatively support only transmission of an SL-PRS whose priority is higher than or equal to a fourth threshold, where the fourth threshold may be indicated by the network device to the first terminal apparatus, or the fourth threshold may be predefined. For another example, the first sidelink grant is a resource selected from the resource pool, and the first sidelink grant may support only transmission of an SL-PRS whose priority is higher than or equal to a third threshold, or the first sidelink grant may support only transmission of an SL-PRS whose priority is higher than or equal to a third threshold and lower than or equal to a fourth threshold, where a priority corresponding to the third threshold is lower than a priority corresponding to the fourth threshold. This is not limited in embodiments of this application.

The configuration information of the resource pool may be used to configure the requested bandwidth information of the SL-PRS whose transmission is supported by the resource pool, and may indicate a value or a range of a requested bandwidth of the SL-PRS whose transmission is supported by the sidelink grant selected from the resource pool. For example, the first sidelink grant is a resource selected from the resource pool, and the first sidelink grant supports only transmission of an SL-PRS whose requested bandwidth is a fifth threshold, where for example, the fifth threshold is 40 MHz. For another example, the first sidelink grant is a resource selected from the resource pool, and the first sidelink grant supports only transmission of an SL-PRS whose requested bandwidth is less than or equal to a fifth threshold, where the fifth threshold may be indicated by the network device to the first terminal apparatus, or the fifth threshold may be predefined. For another example, the first sidelink grant is a resource selected from the resource pool, and the first sidelink grant supports only transmission of an SL-PRS whose requested bandwidth is greater than or equal to a fifth threshold, where the fifth threshold may be indicated by the network device to the first terminal apparatus, or the fifth threshold may be predefined. For another example, the first sidelink grant is a resource selected from the resource pool, and the first sidelink grant supports only transmission of an SL-PRS whose requested bandwidth is within a range, where for example, the range of the requested bandwidth of the SL-PRS whose transmission is supported by the first sidelink grant is 40 MHz to 60 MHz.

The configuration information of the resource pool may be used to configure the information about the quantity of time-domain symbols occupied by the SL-PRS whose transmission is supported by the resource pool, and may indicate the quantity of time-domain symbols occupied by the SL-PRS whose transmission is supported by the sidelink grant selected from the resource pool or a range of the quantity of time-domain symbols occupied by the SL-PRS whose transmission is supported by the sidelink grant. For example, the first sidelink grant is a resource selected from the resource pool, and the first sidelink grant supports only the transmission of an SL-PRS whose quantity of occupied time-domain symbols is equal to a sixth threshold, where for example, the sixth threshold is 3. For another example, the first sidelink grant is a resource selected from the resource pool, and the first sidelink grant supports only transmission of an SL-PRS whose quantity of occupied time-domain symbols is less than or equal to a sixth threshold, where the sixth threshold may be indicated by the network device to the first terminal apparatus, or the sixth threshold may be predefined. For another example, the first sidelink grant is a resource selected from the resource pool, and the first sidelink grant supports only transmission of an SL-PRS whose quantity of occupied time-domain symbols is greater than or equal to a sixth threshold, where the sixth threshold may be indicated by the network device to the first terminal apparatus, or the sixth threshold may be predefined. For another example, the first sidelink grant is a resource selected from the resource pool, and the first sidelink grant supports only transmission of an SL-PRS whose quantity of occupied time-domain symbols is within a specific range, where for example, the first sidelink grant supports transmission of an SL-PRS whose quantity of occupied time-domain symbols ranges from 2 to 4.

Specifically, that the first sidelink grant is selected from the resource pool may alternatively be understood as that the first terminal apparatus may determine, based on the configuration information of the resource pool, one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
periodicity information of the first sidelink grant; or
information about a quantity of time-domain symbols occupied by an SL-PRS whose transmission is supported by the first sidelink grant.

The priority information of the information whose transmission is supported by the first sidelink grant may indicate a priority range or a priority list of the information whose transmission is supported by the first sidelink grant. For example, the first sidelink grant supports only transmission of information whose priority is lower than or equal to a first threshold, where the first threshold may be indicated by the network device to the first terminal apparatus, or the first threshold may be predefined. For another example, the first sidelink grant supports only transmission of information whose priority is included in a priority list, where the priority list may be indicated by the network device to the first terminal apparatus, or the priority list may be predefined. For example, the first sidelink grant may alternatively support only transmission of information whose priority is lower than or equal to a second threshold, where the second threshold may be indicated by the network device to the first terminal apparatus, or the second threshold may be predefined. For another example, the first sidelink grant may alternatively support only transmission of information whose priority is higher than or equal to a first threshold, or the first sidelink grant may support only transmission of information whose priority is higher than or equal to a first threshold and lower than or equal to a second threshold, where a priority corresponding to the first threshold is lower than a priority corresponding to the second threshold. This is not limited in embodiments of this application.

The priority information of the SL-PRS whose transmission is supported by the first sidelink grant may indicate a priority range or a priority list of the SL-PRS whose transmission is supported by the first sidelink grant. For example, the first sidelink grant supports only transmission of an SL-PRS whose priority is equal to a third threshold, where for example, a priority value of the SL-PRS whose transmission is supported by the first sidelink grant is 3. For another example, the first sidelink grant supports only transmission of an SL-PRS whose priority is lower than or equal to a third threshold, where the third threshold may be indicated by the network device to the first terminal apparatus, or the third threshold may be predefined. For another example, the first sidelink grant supports only transmission of an SL-PRS whose priority is included in a priority list, where the priority list may be indicated by the network device to the first terminal apparatus, or the priority list may be predefined. For another example, the first sidelink grant may alternatively support only transmission of an SL-PRS whose priority is higher than or equal to a fourth threshold, where the fourth threshold may be indicated by the network device to the first terminal apparatus, or the fourth threshold may be predefined. For another example, the first sidelink grant may support only transmission of an SL-PRS whose priority is higher than or equal to a third threshold, or the first sidelink grant may support only transmission of an SL-PRS whose priority is higher than or equal to a third threshold and lower than or equal to a fourth threshold, where a priority corresponding to the third threshold is lower than a priority corresponding to the fourth threshold. This is not limited in embodiments of this application.

The requested bandwidth information of the SL-PRS whose transmission is supported by the first sidelink grant may indicate a value or a range of a requested bandwidth of the SL-PRS whose transmission is supported by the first sidelink grant. For example, the first sidelink grant supports only transmission of an SL-PRS whose requested bandwidth is equal to a fifth threshold, where for example, the fifth threshold is 40 MHz. For another example, the first sidelink grant supports only transmission of an SL-PRS whose requested bandwidth is less than or equal to a fifth threshold, where the fifth threshold may be indicated by the network device to the first terminal apparatus, or the fifth threshold may be predefined. For another example, the first sidelink grant supports only transmission of an SL-PRS whose requested bandwidth is greater than or equal to a fifth threshold, where the fifth threshold may be indicated by the network device to the first terminal apparatus, or the fifth threshold may be predefined. For another example, the first sidelink grant supports transmission of an SL-PRS whose requested bandwidth is within a range, where for example, the range of the requested bandwidth of the SL-PRS whose transmission is supported by the first sidelink grant is 40 MHz to 60 MHz.

The periodicity information of the first sidelink grant may indicate that the first sidelink grant is a periodic sidelink transmission resource, and may indicate an occurrence periodicity of the first sidelink grant. For example, if the periodicity supported by the first sidelink grant is 20 ms, it indicates that the sidelink transmission resource corresponding to the first sidelink grant occurs every 20 ms, and may be used for sidelink transmission.

The information about the quantity of time-domain symbols occupied by the SL-PRS whose transmission is supported by the first sidelink grant may indicate the quantity of time-domain symbols occupied by the SL-PRS whose transmission is supported by the first sidelink grant or a range of the quantity of symbols occupied by the SL-PRS whose transmission is supported by the first sidelink grant. For example, the first sidelink grant supports only transmission for a quantity of occupied time-domain symbols being equal to a sixth threshold, where for example, the sixth threshold is 3. For another example, the first sidelink grant supports only transmission of an SL-PRS whose quantity of occupied time-domain symbols is less than or equal to a sixth threshold, where the sixth threshold may be indicated by the network device to the first terminal apparatus, or the sixth threshold may be predefined. For another example, the first sidelink grant supports only transmission of an SL-PRS whose quantity of occupied time-domain symbols is greater than or equal to a sixth threshold, where the sixth threshold may be indicated by the network device to the first terminal apparatus, or the sixth threshold may be predefined. For another example, the first sidelink grant supports only transmission of an SL-PRS whose quantity of occupied time-domain symbols is within a specific range, where for example, the first sidelink grant supports transmission of an SL-PRS whose quantity of occupied time-domain symbols ranges from 2 to 4.

In all embodiments of this application, "a priority is higher than or equal to" includes cases of "a priority is higher than, a priority is equal to, and a priority is not lower than"; or "a priority is lower than or equal to" includes cases of "a priority is lower than, a priority is equal to, and a priority is not higher than". Further, the priority is compared with the threshold. When a smaller priority value corresponds to a higher priority, the priority is higher than or equal to the threshold, corresponding to a case in which the priority value is less than or equal to the threshold; or when a larger priority value corresponds to a higher priority, the priority is higher than or equal to the threshold, corresponding to a case in which the priority value is greater than or equal to the threshold. "A requested bandwidth is less than or equal to" includes cases of "a requested bandwidth is less than, a requested bandwidth is equal to, and a requested bandwidth is not greater than"; or "a requested bandwidth is greater than or equal to" includes cases of "a requested bandwidth is greater than, a requested bandwidth is equal to, and a requested bandwidth is not less than". "A quantity of time-domain symbols is less than or equal to" includes cases of "a quantity of time-domain symbols is less than, a quantity of time-domain symbols is equal to, and a quantity of time-domain symbols is not greater than"; or "a quantity of time-domain symbols is greater than or equal to" includes cases of "a quantity of time-domain symbols is greater than, a quantity of time-domain symbols is equal to, and a quantity of time-domain symbols is not less than".

In another implementation, a network device sends fifth information to the first terminal apparatus, where the fifth information indicates the first sidelink grant. Correspondingly, the first terminal apparatus receives the fifth information from the network device, and the terminal device determines the first sidelink grant based on the fifth information.

For example, the fifth information is downlink control information (downlink control information, DCI), and the network device indicates the first sidelink grant to the first terminal apparatus via the DCI; or the fifth information is an RRC message, and the network device indicates the first sidelink grant to the first terminal apparatus via the RRC message.

Optionally, before receiving the fifth information from the network device, the first terminal apparatus sends fourth information to the network device, where the fourth information is for requesting to obtain a sidelink grant available for transmission of an SL-PRS. Correspondingly, the network device receives the fourth information from the first terminal apparatus, and the network device sends the fifth information to the first terminal apparatus based on the fourth information. The fourth information may be an RRC message or a MAC CE.

For example, the first terminal apparatus may send the fourth information to the network device via a resource request message like the MAC CE. Correspondingly, the fifth information sent by the network device to the first terminal apparatus may be DCI. For example, the first sidelink grant is scheduled by using the DCI, or the periodic first sidelink grant configured by using RRC is activated by using the DCI. Alternatively, the first terminal apparatus may send the fourth information to the network device via the RRC message or the MAC CE. For example, the first terminal apparatus may send the fourth information to the network device via a sidelink user information (sidelink UE Information) message or the MAC CE. Correspondingly, the network device may send the fifth information to the first terminal apparatus via an RRC reconfiguration message or a system message.

Optionally, before the first terminal apparatus sends the fourth information to the network device, the network device sends sixth information to the first terminal apparatus. Correspondingly, the first terminal apparatus receives the sixth information sent by the network device. The sixth information is used to configure a sidelink grant used by the first terminal apparatus to transmit the SL-PRS. For example, the sidelink grant used to transmit the SL-PRS is a periodic sidelink grant, or the sidelink grant used to transmit the SL-PRS is a configured grant type 2 (Configured Grant Type 2). Optionally, the sixth information may include a time-frequency resource location of the first sidelink grant. Optionally, the sixth information may further include periodicity information of the first sidelink grant, indicating a periodic sidelink transmission resource used to transmit the SL-PRS. Optionally, the sixth information may further indicate an initial status of a periodic sidelink grant used to transmit the SL-PRS. The initial status may include an active state and an inactive state. The active state indicates that the first terminal apparatus can use the periodic sidelink grant after the first terminal apparatus receives the periodic sidelink grant configured by using the sixth information, and the inactive state indicates that the first terminal apparatus cannot use the resource after the first terminal apparatus receives the periodic sidelink grant configured by using the sixth information, and needs to wait for the network device to send the DCI for activation, for example, to send the fifth information for activation. Optionally, the sixth information further includes index (Index) information of the configured periodically transmitted sidelink grant, for example, an index of the sidelink grant configured by the network device for the first terminal apparatus via the sixth information. Optionally, the sixth information further includes index information of a resource pool that the configured sidelink grant is in. For example, the first terminal apparatus may uniquely determine the first sidelink grant via the index information of the resource pool.

Optionally, the fourth information or the fifth information includes one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
information about a quantity of time-domain symbols occupied by an SL-PRS whose transmission is supported by the first sidelink grant;
index information corresponding to the first sidelink grant;
index information of a resource pool that the first sidelink grant is in; or
experience requirement information of a positioning service supported by the first sidelink grant.

The priority information of the information whose transmission is supported by the first sidelink grant may indicate a priority range or a priority list of the information whose transmission is supported by the first sidelink grant. For example, the first sidelink grant supports only transmission of information whose priority is lower than or equal to a first threshold, where the first threshold may be indicated by the network device to the first terminal apparatus, or the first threshold may be predefined. For another example, the first sidelink grant supports only transmission of information whose priority is included in a priority list, where the priority list may be indicated by the network device to the first terminal apparatus, or the priority list may be predefined. For example, the first sidelink grant may alternatively support only transmission of information whose priority is lower than or equal to a second threshold, where the second threshold may be indicated by the network device to the first terminal apparatus, or the second threshold may be predefined. For another example, the first sidelink grant may alternatively support only transmission of information whose priority is higher than or equal to a first threshold, or the first sidelink grant may support only transmission of information whose priority is higher than or equal to a first threshold and lower than or equal to a second threshold, where a priority corresponding to the first threshold is lower than a priority corresponding to the second threshold. This is not limited in embodiments of this application.

The priority information of the SL-PRS whose transmission is supported by the first sidelink grant may indicate a priority range or a priority list of the SL-PRS whose transmission is supported by the first sidelink grant. For example, the first sidelink grant supports only transmission of an SL-PRS whose priority is equal to a third threshold, where for example, a priority value of the SL-PRS whose transmission is supported by the first sidelink grant is 3. For another example, the first sidelink grant supports only transmission of an SL-PRS whose priority is lower than or equal to a third threshold, where the third threshold may be indicated by the network device to the first terminal apparatus, or the third threshold may be predefined. For another example, the first sidelink grant supports only transmission of an SL-PRS whose priority is included in a priority list, where the priority list may be indicated by the network device to the first terminal apparatus, or the priority list may be predefined. For another example, the first sidelink grant may alternatively support only transmission of an SL-PRS whose priority is higher than or equal to a fourth threshold, where the fourth threshold may be indicated by the network device to the first terminal apparatus, or the fourth threshold may be predefined. For another example, the first sidelink grant may support only transmission of an SL-PRS whose priority is higher than or equal to a third threshold, or the first sidelink grant may support only transmission of an SL-PRS whose priority is higher than or equal to a third threshold and lower than or equal to a fourth threshold, where a priority corresponding to the third threshold is lower than a priority corresponding to the fourth threshold. This is not limited in embodiments of this application.

The requested bandwidth information of the SL-PRS whose transmission is supported by the first sidelink grant may indicate a value or a range of a requested bandwidth of the SL-PRS whose transmission is supported by the first sidelink grant. For example, the first sidelink grant supports only transmission of an SL-PRS whose requested bandwidth is equal to a fifth threshold, where for example, the fifth threshold is 40 MHz. For another example, the first sidelink grant supports only transmission of an SL-PRS whose requested bandwidth is less than or equal to a fifth threshold, where the fifth threshold may be indicated by the network device to the first terminal apparatus, or the fifth threshold may be predefined. For another example, the first sidelink grant supports only transmission of an SL-PRS whose requested bandwidth is greater than or equal to a fifth threshold, where the fifth threshold may be indicated by the network device to the first terminal apparatus, or the fifth threshold may be predefined. For another example, the first sidelink grant supports transmission of an SL-PRS whose requested bandwidth is within a range, where for example, the range of the requested bandwidth of the SL-PRS whose transmission is supported by the first sidelink grant is 40 MHz to 60 MHz.

The information about the quantity of time-domain symbols occupied by the SL-PRS whose transmission is supported by the first sidelink grant may indicate the quantity of time-domain symbols occupied by the SL-PRS whose transmission is supported by the first sidelink grant or a range of the quantity of symbols occupied by the SL-PRS whose transmission is supported by the first sidelink grant. For example, the first sidelink grant supports only transmission for a quantity of occupied time-domain symbols being equal to a sixth threshold, where for example, the sixth threshold is 3. For another example, the first sidelink grant supports only transmission of an SL-PRS whose quantity of occupied time-domain symbols is less than or equal to a sixth threshold, where the sixth threshold may be indicated by the network device to the first terminal apparatus, or the sixth threshold may be predefined. For another example, the first sidelink grant supports only transmission of an SL-PRS whose quantity of occupied time-domain symbols is greater than or equal to a sixth threshold, where the sixth threshold may be indicated by the network device to the first terminal apparatus, or the sixth threshold may be predefined. For another example, the first sidelink grant supports only transmission of an SL-PRS whose quantity of occupied time-domain symbols is within a specific range, where for example, the first sidelink grant supports transmission of an SL-PRS whose quantity of occupied time-domain symbols ranges from 2 to 4.

The index information corresponding to the first sidelink grant may indicate an index of the first sidelink grant, and the index of the first sidelink grant may be an index that is of the first sidelink grant and that is indicated in the sixth information sent by the network device and received by the first terminal apparatus. When the periodic sidelink transmission resource for the first terminal apparatus is configured or the first sidelink grant is the sidelink transmission resource of the configured grant type 2, the network device indicates the information about the resource pool that the sidelink transmission resource is in and the time-frequency resource location of the sidelink transmission resource, and the first terminal apparatus determines the inactive first sidelink grant based on the received sixth information. When determining, based on an upper-layer service, that the first terminal apparatus needs to use the first sidelink grant, the first terminal apparatus may send, to the network device, the fourth information carrying the index information corresponding to the first sidelink grant, for the network device to determine that the first terminal apparatus intends to activate the first sidelink grant. The network device sends the fifth information to the first terminal apparatus, for example, indicates, by using the DCI, to activate the first sidelink grant. Correspondingly, when determining, based on the upper-layer service, that the first terminal apparatus does not need to continue to use the first sidelink grant, the first terminal apparatus may send, to the network device, a MAC CE carrying the index information corresponding to the first sidelink grant, so that the network device determines that the first terminal apparatus intends to deactivate the first sidelink grant. The MAC CE may be the same as or different from the fourth information. The network device indicates, by sending DCI to the first terminal apparatus, to deactivate the first sidelink grant. Correspondingly, when determining, based on the upper-layer service, that the first terminal apparatus does not need to continue to use the first sidelink grant, the first terminal apparatus may send, to the network device, a MAC CE carrying the index information corresponding to the first sidelink grant, so that the network device determines that the first terminal apparatus intends to deactivate the first sidelink grant. The MAC CE may be the same as or different from the fourth information. The network device may further distinguish, based on the MAC CE, whether the first terminal apparatus requests to activate, deactivate, or configure the sidelink configured grant. For example, for a possible format of the MAC CE, a format of a sidelink configured grant confirmation MAC CE (Sidelink Configured Grant Confirmation MAC CE) may be reused, and a difference is that a new LCID value is used for a MAC subheader. The network device determines, by receiving an LCID with a corresponding value, that the first terminal apparatus requests to activate the configured sidelink configured grant, and determines, by using an indication of "1" in a bitmap, an index of the first sidelink grant that the first terminal device intends to activate, or determines, by using an indication of "0" in a bitmap, an index of the first sidelink grant that the first terminal apparatus intends to deactivate, to determine the request of the first terminal apparatus. For another example, for another possible format of the MAC CE, the index information corresponding to the first sidelink grant and 1-bit indication information may be directly carried, so that the network device determines that the first terminal apparatus intends to activate or deactivate the first sidelink grant. For another example, another possibility is that requesting to activate the first sidelink grant by the first terminal apparatus and requesting to deactivate the first sidelink grant by the first terminal apparatus are distinguished by using different LCIDs and index information corresponding to the first sidelink grant. In other words, different MAC CEs respectively indicate to request to activate and deactivate the first sidelink grant. The network device indicates, by sending DCI to the first terminal apparatus, to deactivate the first sidelink grant. Because the first terminal apparatus better knows whether the SL-PRS needs to be transmitted, based on the request of the first terminal apparatus for the transmission resource of the SL-PRS, the network device may activate and deactivate the first sidelink grant used by the first terminal apparatus to transmit the SL-PRS, so that the first sidelink grant can be used more effectively, thereby improving usage efficiency of the sidelink transmission resource. In this embodiment, a solution in which the MAC CE carrying the information for requesting the network device to activate or deactivate the first sidelink grant may be independently implemented, to improve usage efficiency of the sidelink transmission resource.

The index information of the resource pool that the first sidelink grant is in may indicate the resource pool that the first sidelink grant is in, to determine the first sidelink grant. For example, the network device determines, based on the received fourth information and the resource pool that the first sidelink grant indicated by the fourth information is in, the first sidelink grant indicated by the first terminal apparatus. For example, the first sidelink grant is a periodic sidelink transmission resource, or the first sidelink grant is a sidelink transmission resource of a configured grant type 2. The fourth information indicates that the first terminal apparatus intends to activate the first sidelink grant, so that the first terminal apparatus uses the first sidelink grant after the network device delivers the activated first sidelink grant by using DCI. For another example, the first terminal device receives the fifth information sent by the network device, and determines the activated first sidelink grant based on the index of the resource pool that the sidelink grant indicated by the fifth information is in. The first sidelink grant is a periodic sidelink transmission resource. For another example, the index of the resource pool that the first sidelink grant is in may be an index that is of the resource pool that the first sidelink grant is in and that is included in the sixth information sent by the network device and received by the first terminal apparatus. When the periodic sidelink transmission resource for the first terminal apparatus is configured, the network device indicates the information about the resource pool that the sidelink transmission resource is in and the time-frequency resource location of the sidelink transmission resource, and the first terminal apparatus determines the inactive first sidelink grant based on the received sixth information. When determining, based on an upper-layer service, that the first terminal apparatus needs to use the first sidelink grant, the first terminal apparatus may send, to the network device, the fourth information carrying the index information of the resource pool that the first sidelink grant is in, for the network device to determine that the first terminal apparatus intends to activate the first sidelink grant. The network device sends the fifth information to the first terminal apparatus, for example, indicates, by using the DCI, to activate the first sidelink grant. Correspondingly, when determining, based on an upper-layer service, that the first terminal apparatus does not need to continue to use the first sidelink grant, the first terminal apparatus may send, to the network device, a MAC CE carrying the index information of the resource pool that the first sidelink grant is in, so that the network device determines that the first terminal apparatus intends to deactivate the first sidelink grant. The MAC CE may be the same as or different from the fourth information. The network device indicates, by sending DCI to the first terminal apparatus, to deactivate the first sidelink grant. Because the first terminal apparatus better knows whether the SL-PRS needs to be transmitted, based on the request of the first terminal apparatus for the transmission resource of the SL-PRS, the network device may activate and deactivate the first sidelink grant used by the first terminal apparatus to transmit the SL-PRS, so that the first sidelink grant can be used more effectively, thereby improving usage efficiency of the sidelink transmission resource. In this embodiment, a solution in which the MAC CE carrying the information for requesting the network device to activate or deactivate the first sidelink grant may be independently implemented, to improve usage efficiency of the sidelink transmission resource.

The experience requirement information of the positioning service supported by the first sidelink grant may indicate a precision requirement of the positioning service supported by the first sidelink grant. When the positioning service of the first terminal apparatus has a high precision requirement, a bandwidth of an SL-PRS that needs to be transmitted is large or an SL-PRS that needs to be transmitted occupies a large quantity of time-domain symbols; or when the positioning service of the first terminal apparatus has a low precision requirement, a bandwidth of an SL-PRS that needs to be transmitted is small or an SL-PRS that needs to be transmitted occupies a small quantity of time-domain symbols.

Optionally, the first terminal apparatus determines the information whose transmission is supported the first sidelink grant, to determine the at least one destination address. It may be understood that the first sidelink grant has a requirement on the information whose transmission is supported. For example, it is determined that the first sidelink grant is used for a destination address that has an information transmission requirement, the first sidelink grant has a requirement on content of the information whose transmission is supported, the first sidelink grant has a requirement on a priority of the information whose transmission is supported, the first sidelink grant has a requirement on an information parameter of the information whose transmission is supported, or the first sidelink grant has a requirement on information transmission time. The foregoing plurality of requirements can be combined.

For example, the first terminal apparatus has five destination addresses that have a transmission requirement, including a destination address 1, a destination address 2, a destination address 3, a destination address 4, and a destination address 5.
(1) An SL-PRS1 and a MAC CE 1 need to be transmitted to the destination address 1;
(2) an SL-PRS2 needs to be transmitted to the destination address 2;
(3) an SL-PRS 3 and data that is corresponding to a logical channel 1 need to be transmitted to the destination address 3;
(4) data corresponding to a logical channel 2 needs to be transmitted to the destination address 4; and
(5) a MAC CE 2 and data that is corresponding to a logical channel 3 need to be transmitted to the destination address 5.

For example, after obtaining the first sidelink grant, the first terminal apparatus needs to determine that a destination address has an information transmission requirement. For example, after obtaining the first sidelink grant, the first terminal apparatus determines that the destination address 1, the destination address 2, the destination address 3, the destination address 4, and the destination address 5 all have the information transmission requirement, to determine that the at least one destination address is the destination address 1, the destination address 2, the destination address 3, the destination address 4, and the destination address 5.

For example, the first sidelink grant has the requirement on the content of the information whose transmission is supported. If the first terminal apparatus determines that the first sidelink grant is a transmission resource in the dedicated resource pool, the first sidelink grant cannot be used to transmit a MAC CE and data corresponding to a logical channel, to determine that the at least one destination address is a destination address that has an SL-PRS transmission requirement, to determine that the at least one destination address is the destination address 1, the destination address 2, and the destination address 3. If the first terminal apparatus determines that the first sidelink grant is a transmission resource in the shared resource pool, the first sidelink grant may be available for transmission of both an SL-PRS and a MAC CE and data corresponding to a logical channel, to determine that the at least one destination address is the destination address 1, the destination address 2, the destination address 3, the destination address 4, and the destination address 5. If the first terminal apparatus determines that the first sidelink grant resource is a resource pool (a discovery resource pool) used to transmit a discovery message and the discovery resource pool is not the shared resource pool, and the data corresponding to the logical channel 1 is the discovery message, the first terminal apparatus determines that the at least one destination address is the destination address 3. If the first terminal apparatus determines that the first sidelink grant resource is a resource pool used to transmit a discovery message and the discovery resource pool is a shared resource pool, and the data corresponding to the logical channel 1 is the discovery message, the first terminal apparatus determines that the at least one destination address is the destination address 3 and the destination address 1 and the destination address 2 that include an SL-PRS transmission requirement. When the discovery resource pool is not the shared resource pool, a transmission resource in the discovery resource pool is used to transmit only the discovery message; or when the discovery resource pool is the shared resource pool, a transmission resource in the discovery resource pool may be used to transmit the discovery message and the SL-PRS.

For another example, the first sidelink grant has the requirement on the priority of the information whose transmission is supported. An example in which SL-PRSs have eight priority levels is used. Correspondingly, a priority value of the SL-PRS 1 is 3, a priority value of the SL-PRS 2 is 5, the priority value of the SL-PRS 1 is 1, priority values of the MAC CE 1 and the MAC CE 2 are 1, the logical channel 1 is a SCCH and has a priority value of 1, the logical channel 2 is an STCH and has a priority value of 1, and the logical channel 3 is an STCH and has a priority of 8. For the priority of the SL-PRS in this embodiment, refer to the foregoing descriptions. This is not limited herein. If the first terminal apparatus determines that the first sidelink grant is a transmission resource in the shared resource pool, and supports transmission of information whose priority is higher than or equal to a threshold, where for example, the threshold is 3, all priorities of information that needs to be transmitted to the destination address 2 are lower than the threshold 3 (all priority values of the information that needs to be transmitted to the destination address 2 are greater than 3), to determine that the at least one destination address does not include the destination address 2, and the at least one destination address is the destination address 1, the destination address 3, the destination address 4, and the destination address 5. If determining that the first sidelink grant is a transmission resource in the dedicated resource pool, and supports transmission of information whose priority is higher than or equal to a threshold, where for example, the threshold is 3, the first terminal apparatus determines that a first grant resource cannot be used to transmit data corresponding to a logical channel, a MAC CE, and an SL-PRS whose priority is lower than 3, to determine that the at least one destination address is the destination address 1 and the destination address 3. For the requirement on the priority of the SL-PRS whose transmission is supported by the first grant resource, refer to the foregoing descriptions. The priority of the SL-PRS whose transmission is supported by the first grant resource may alternatively be lower than or equal to a threshold, or may be within a priority interval range. This is not limited herein.

For another example, the first sidelink grant has the requirement on the information parameter of the information whose transmission is supported. For example, the first sidelink grant has a requirement on a requested bandwidth of an SL-PRS whose transmission is supported, a quantity of occupied time-domain symbols, precision of a positioning service, or the like, and any destination address corresponding to transmission of an information parameter that does not satisfy the requirement cannot be determined as a destination address in the at least one destination address. The SL-PRS 1 needs a bandwidth of 100 MHz to ensure positioning and ranging performance, the SL-PRS 2 needs a bandwidth of 40 MHz to ensure positioning and ranging performance, and the SL-PRS 3 needs a bandwidth of 40 MHz to ensure positioning and ranging performance. For example, the first terminal apparatus determines that the first sidelink grant is a transmission resource in the shared resource pool, and a maximum bandwidth of the SL-PRS whose transmission is supported is 40 MHz. Although the SL-PRS 1 that needs to be transmitted to the destination address 1 does not satisfy the requirement, the MAC CE 1 that needs to be transmitted to the destination address 1 satisfies the requirement. In this case, it is determined that the at least one destination address is the destination address 1, the destination address 2, the destination address 3, the destination address 4, and the destination address 5. For example, if the first terminal apparatus determines that the first sidelink grant is a transmission resource in the dedicated resource pool, and a maximum bandwidth of the SL-PRS whose transmission is supported is 40 MHz, it is determined that the at least one destination address is the destination address 2 and the destination address 3.

For another example, the first sidelink grant has the requirement on the information transmission time. For example, if the first sidelink grant is within SL DRX inactive time of terminal apparatuses corresponding to the destination address 1 and the destination address 2, it is determined that the at least one destination address does not include the destination address 1 and the destination address 2, to determine that the at least one destination address is the destination address 3, the destination address 4, and the destination address 5. In this embodiment of this application, a terminal apparatus corresponding to a destination address may be understood as that an address of the terminal apparatus is the destination address.

After determining the at least one destination address, the first terminal apparatus determines, based on the destination address corresponding to the information with the highest priority in all the information that needs to be transmitted to the at least one destination address, that the first destination address is associated with the first sidelink grant. The MAC CE, the logical channel data, and/or the SL-PRS that need/needs to be transmitted to the at least one destination address need/needs to satisfy the requirement on the information whose transmission is supported the first sidelink grant.

For example, when the MAC layer of the first terminal apparatus selects a destination address associated with an SL grant, the MAC layer is to select, for transmission corresponding to each piece of sidelink control information (sidelink control information, SCI), a destination address associated with one of unicast, multicast, and broadcast; and if SL DRX is applied for a terminal apparatus corresponding to a destination address, transmission time corresponding to the SL grant needs to be within active time of the terminal apparatus corresponding to the destination address. The destination address has at least one of a MAC CE with a highest priority, a logical channel with a highest priority, and an SL-PRS with a highest priority.
1. The logical channel and the MAC CE (if the MAC CE exists) satisfy all the following conditions:
   (1) SL data is available for transmission;
   (2) SBj>0, in case there is any logical channel having SBj>0, where SBj is token bucket information maintained for a logical channel j;
   (3) sl-configuredGrantType1Allowed, if configured, is set to true in case the SL grant is a configured grant type 1 (configured grant type 1);
   (4) sl-AllowedCG-List, if configured, includes a configured grant (configured grant) index associated with the SL grant;
   (5) sl-HARQ-FeedbackEnabled is set to disabled, if a physical layer sidelink feedback channel (physical sidelink feedback channel, PSFCH) is not configured for the SL grant associated with the SCI; and
   (6) the SL grant is not a resource in the dedicated resource pool, or the SL grant is a resource in the shared resource pool.
2. The SL-PRS satisfies the following conditions:
   (1) the SL-PRS is requested for transmission; and
   (2) if a priority of an SL-PRS that can be supported by the SL grant, for example, a threshold of a priority of information whose transmission is supported by the SL grant, is configured, the SL-PRS needs to satisfy a threshold requirement (for details, refer to the foregoing descriptions); or if a priority list of an SL-PRS that can be supported by the SL grant is configured, the priority list needs to include a priority of the SL-PRS; or if another parameter requirement of the SL-PRS, for example, a requested bandwidth of the SL-PRS, a quantity of occupied time-domain symbols, or a precision requirement of a positioning service, that can be supported by the SL grant is configured, the SL-PRS needs to satisfy the corresponding parameter requirement.

The SL grant associated with the SCI may be a transmission opportunity in the shared resource pool or a transmission opportunity in the dedicated resource pool.

For example, when the MAC layer of the first terminal apparatus selects a destination address associated with the SL grant, for transmission corresponding to each piece of SCI, the MAC layer is to:
when a discovery resource pool is configured, the discovery resource pool is a shared resource pool, and the SL grant associated with the SCI is an SL grant in the discovery resource pool, select a destination address associated with an SL discovery message. If SL DRX is applied for a terminal apparatus corresponding to a destination address, transmission time corresponding to the SL grant needs to be within active time of the terminal apparatus corresponding to the destination address.
1. The logical channel satisfies all the following conditions:
   (1) an SL discovery message message is available for transmission;
   (2) SBj>0, in case there is any logical channel having SBj>0, where SBj is token bucket information maintained for a logical channel j;
   (3) sl-configuredGrantType1Allowed, if configured, is set to true in case the SL grant is a configured grant type 1;
   (4) sl-AllowedCG-List, if configured, includes a configured grant index associated with the SL grant; and
   (5) sl-HARQ-FeedbackEnabled is set to disabled, if a PSFCH is not configured for the SL grant associated with the SCI.
2. The SL-PRS satisfies the following conditions:
   (1) the SL-PRS is requested for transmission; and
   (2) if a priority of an SL-PRS that can be supported by the SL grant, for example, a threshold of a priority of information whose transmission is supported by the SL grant, is configured, the SL-PRS needs to satisfy a threshold requirement (for details, refer to the foregoing descriptions); or if a priority list of an SL-PRS that can be supported by the SL grant is configured, the priority list needs to include a priority of the SL-PRS; or if another parameter requirement of the SL-PRS, for example, a requested bandwidth of the SL-PRS, a quantity of occupied time-domain symbols, or a precision requirement of a positioning service, that can be supported by the SL grant is configured, the SL-PRS needs to satisfy the corresponding parameter requirement.

When a discovery resource pool is configured, the discovery resource pool is not a shared resource pool, and the SL grant associated with the SCI is an SL grant in the discovery resource pool, a destination address associated with the SL discovery message is selected; and if SL DRX is applied for a terminal apparatus corresponding to a destination address, transmission time corresponding to the SL grant needs to be within active time of the terminal apparatus corresponding to the destination address.
1. The logical channel satisfies all the following conditions:
   (1) an SL discovery message is available for transmission;
   (2) SBj>0, in case there is any logical channel having SBj>0, where SBj is token bucket information maintained for a logical channel j;
   (3) sl-configuredGrantType1Allowed, if configured, is set to true in case the SL grant is a configured grant type 1;
   (4) sl-AllowedCG-List, if configured, includes a configured grant index associated with the SL grant; and
   (5) sl-HARQ-FeedbackEnabled is set to disabled, if a PSFCH is not configured for the SL grant associated with the SCI.

Optionally, if logical channels that need to be transmitted to a plurality of destination addresses have a same priority, SL-PRSs have a same priority, and/or MAC CEs have a same priority, the first terminal apparatus may randomly select one of the plurality of destination addresses as the first destination address.

Optionally, after determining that the first destination address is associated with the first sidelink grant, the first terminal apparatus selects the logical channel, the MAC CE, and/or the SL-PRS to be transmitted to the first destination address. It may be understood that, after determining the first destination address based on the priority of all the information that needs to be transmitted to the at least one destination address, the first terminal apparatus further needs to select, based on the priority of the information that needs to be transmitted to the first destination address and a size of the transmission resource of the first sidelink grant, information to be transmitted to the first destination address. The selected logical channel, MAC CE, and/or SL-PRS are/is used for subsequent allocation of the transmission resource of the first sidelink grant.

For example, the first terminal apparatus selects a logical channel and/or an SL-PRS that satisfy/satisfies the following conditions.
1. The logical channel satisfies the following conditions:
   (1) SL data is available for transmission;
   (2) sl-configuredGrantType1Allowed, if configured, is set to true in case the SL grant is a configured grant type 1;
   (3) sl-AllowedCG-List, if configured, includes a configured grant index associated with the SL grant; and
   (4) sl-HARQ-FeedbackEnabled is set to a value that satisfies the following conditions:
      (i) a PSFCH is configured for the SL grant associated with the SCI, the first terminal apparatus is capable of PSFCH reception, and sl-HARQ-FeedbackEnabled is set to enabled; and sl-HARQ-FeedbackEnabled for the highest priority logical channel satisfying the above conditions is enabled; or
      (ii) a PSFCH is configured for the SL grant associated with the SCI, the first terminal apparatus is capable of PSFCH reception, and sl-HARQ-FeedbackEnabled is set to disabled; and sl-HARQ-FeedbackEnabled for the highest priority logical channel satisfying the above conditions is disabled; or
      (iii) no PSFCH is configured for the SL grant associated with the SCI or the first terminal apparatus does not have a capability of PSFCH reception, and sl-HARQ-FeedbackEnabled is set to disabled.
2. The SL-PRS satisfies the following conditions:
   (1) there is an SL-PRS with a highest priority in SL-PRSs requested for transmission; and
   (2) if a priority of an SL-PRS that can be supported by the SL grant, for example, a threshold of a priority of information whose transmission is supported by the SL grant, is configured, the SL-PRS needs to satisfy a threshold requirement (for details, refer to the foregoing descriptions); or if a priority list of an SL-PRS that can be supported by the SL grant is configured, the priority list needs to include a priority of the SL-PRS; or if another parameter requirement of the SL-PRS, for example, a requested bandwidth of the SL-PRS, a quantity of occupied time-domain symbols, or a precision requirement of a positioning service, that can be supported by the SL grant is configured, the SL-PRS needs to satisfy the corresponding parameter requirement.

320: The first terminal apparatus transmits, to the second terminal apparatus in the first sidelink grant, the first information and/or the data packet corresponding to the first information, where an address of the second terminal apparatus is the first destination address. Specifically, the physical layer of the first terminal apparatus transmits, to the second terminal apparatus in the first sidelink grant, the first information and/or the data packet corresponding to the first information. The data packet corresponding to the first information may be understood as a MAC PDU formed by the data packet corresponding to the first information.

In the technical solution provided in this embodiment of this application, the first terminal apparatus may determine, from the at least one destination address based on a priority of the SL-PRS, the MAC CE, and/or the logical channel, that the first destination address is associated with the first sidelink grant, where the first destination address has the first information with the highest priority. In the first sidelink grant, the first terminal apparatus transmits, to the second terminal apparatus corresponding to the first destination address, the first information and/or the data packet corresponding to the first information. In this technical solution, it may be determined that the first destination address is associated with the first sidelink grant, and the first destination address has the first information with the highest priority in the at least one destination address. In this way, the first information with the highest priority can be preferentially transmitted in the first sidelink grant, thereby improving information transmission reliability.

When the first information is the SL-PRS, there are the following three implementations in which the first terminal apparatus transmits, to the second terminal apparatus in the first sidelink grant, the first information and/or the data packet corresponding to the first information.

In an implementation, when the first information is the SL-PRS, the first terminal apparatus transmits, to the second terminal apparatus in the first sidelink grant, the SL-PRS and a data packet corresponding to third information, where the third information includes a data packet corresponding to information other than the SL-PRS in the first destination address. It may be understood that the third information includes the data packet corresponding to the information other than the SL-PRS in the information that needs to be transmitted to the first destination address, and the information other than the SL-PRS in the information that needs to be transmitted to the first destination address may be the MAC CE and/or the logical channel. The MAC layer of the first terminal apparatus generates a data packet like a MAC PDU based on the logical channel and/or the MAC CE that satisfy/satisfies the requirement in the information that needs to be transmitted to the first destination address. Optionally, the MAC PDU may be generated by the MAC layer of the first terminal apparatus based on a transport block size (transportation block size, TBS) provided by the physical layer, or may be generated by the MAC layer of the first terminal apparatus based on a size that is of the MAC PDU and that is inferred based on a TBS. The MAC layer of the first terminal apparatus performs packet assembly of the MAC PDU based on logical channel prioritization (logical channel prioritization, LCP) and based on the obtained TBS and a priority order of the logical channels. For a specific generation manner, refer to a manner in section 5.22.1.4.1.3 in TS 38.321.

Optionally, the MAC layer of the first terminal apparatus generates the MAC PDU based on the TBS provided by the physical layer.

For example, the MAC layer of the first terminal apparatus selects a modulation and coding scheme (modulation and coding scheme, MCS), and the MAC layer determines to transmit the SL-PRS in the first sidelink grant, and indicates, to the physical layer, the MCS selected by the MAC layer and information about the SL-PRS; and the physical layer calculates a TBS based on the MCS selected by the MAC layer and the information about the SL-PRS, and then notifies the MAC layer of the TBS. The information about the SL-PRS transmitted in the first sidelink grant may include one or more of the following: the MAC layer determining that the physical layer needs to transmit the SL-PRS, a quantity of time-domain symbols occupied by the SL-PRS, or a priority of the SL-PRS. The information about the SL-PRS notified by the MAC layer to the physical layer may be used by the physical layer to determine, after a transmission resource occupied by the SL-PRS is removed based on the information about the SL-PRS, the TBS that can be further carried in the first sidelink grant. For example, the physical layer determines, based on the MCS and the information about the SL-PRS that are indicated by the MAC layer, that the SL-PRS needs to be transmitted in the first sidelink grant, and the physical layer may determine, based on congestion information of the resource pool that the first sidelink grant is in, the quantity of time-domain symbols occupied by the SL-PRS, to determine the TBS that can be further carried in the first sidelink grant. For another example, the MAC layer notifies the physical layer of the priority of the SL-PRS that needs to be transmitted in the first sidelink grant, and the physical layer may determine, based on the priority of the SL-PRS, the quantity of time-domain symbols occupied by the SL-PRS, to determine the TBS that can be further carried in the first sidelink grant. For another example, the MAC layer notifies the physical layer of the quantity of time-domain symbols occupied by the SL-PRS that needs to be transmitted in the first sidelink grant, and the physical layer may determine, based on the quantity that is of time-domain symbols occupied by the SL-PRS and that is indicated by the MAC layer, the TBS that can be further carried in the first sidelink grant. The MAC layer generates a MAC PDU of a corresponding size based on the TBS.

For example, before the MAC layer of the first terminal apparatus indicates the information about the SL-PRS to the physical layer, the physical layer provides, for the MAC layer, the TBS from which a transmission resource occupied by the SL-PRS is not removed. The MAC layer of the first terminal apparatus may indicate the physical layer to recalculate, based on the determined information about the SL-PRS, the TBS that can be further carried in the first sidelink grant. For a calculation manner, refer to the foregoing possible manner.

Optionally, the MAC layer of the first terminal apparatus generates the MAC PDU based on the size that is of the MAC PDU and that is inferred based on the TBS. For example, before the MAC layer of the first terminal apparatus indicates the information about the SL-PRS to the physical layer, the physical layer provides, for the MAC layer, the TBS from which a transmission resource occupied by the SL-PRS is not removed. The MAC layer of the first terminal apparatus may infer the size of the MAC PDU based on the TBS and the information about the SL-PRS, and generate the MAC PDU.

In this implementation, the first sidelink grant is a sidelink grant in the shared resource pool. The information that needs to be transmitted to the first destination address includes the SL-PRS and the second information, or the first destination address has the SL-PRS and the second information, and the second information is the MAC CE and/or the logical channel data.

Specifically, the MAC layer of the first terminal apparatus forms a MAC PDU by using the data packet corresponding to the third information, and delivers the MAC PDU to the physical layer of the first terminal apparatus. The physical layer of the first terminal apparatus transmits the MAC PDU and the SL-PRS to the second terminal apparatus by using the first sidelink grant.

In another implementation, when the first information is the SL-PRS, the first terminal apparatus transmits, to the second terminal apparatus in the first sidelink grant, the SL-PRS and the data packet corresponding to the SL-PRS, and does not need to transmit the MAC CE and the data packet corresponding to the logical channel. In this implementation, the first sidelink grant is a sidelink grant in the shared resource pool. The information that needs to be transmitted to the first destination address includes only the SL-PRS, the information that is transmitted to the first destination address and that satisfies the transmission requirement includes only the SL-PRS, or the information that needs to be transmitted to the first destination address includes the SL-PRS and the second information. However, after the transmission resource occupied by the SL-PRS is considered to be removed, the transmission resource of the first sidelink grant is insufficient to transmit the MAC CE or the data packet corresponding to the logical channel in the second information.

Specifically, the MAC layer of the first terminal apparatus forms a MAC PDU by using the data packet corresponding to the SL-PRS, and delivers the MAC PDU to the physical layer of the first terminal apparatus. The physical layer of the first terminal apparatus transmits the MAC PDU and the SL-PRS to the second terminal apparatus by using the first sidelink grant.

Optionally, that the data packet corresponding to the SL-PRS does not include a MAC SDU and the MAC CE may be understood as that the data packet corresponding to the SL-PRS does not include a data packet corresponding to a logical channel and the MAC CE; or the data packet corresponding to the SL-PRS includes a MAC PDU subheader; or the data packet corresponding to the SL-PRS includes a MAC PDU subheader and a padding (padding) bit; or the data packet corresponding to the SL-PRS includes a MAC CE associated with the SL-PRS. Specifically, that the data packet corresponding to the SL-PRS does not include a MAC SDU and the MAC CE may be understood as that the data packet corresponding to the SL-PRS does not include a data packet corresponding to a logical channel and the MAC CE; or the data packet corresponding to the SL-PRS includes only a MAC PDU subheader; or the data packet corresponding to the SL-PRS includes only a MAC PDU subheader and a padding (padding) bit; or the data packet corresponding to the SL-PRS includes only a MAC CE associated with the SL-PRS.

Currently, during packet assembly of the MAC PDU, the MAC layer needs to include the data corresponding to the logical channel or the MAC SDU that needs to be transmitted, or needs to include the MAC CE. There is still a restriction condition for the MAC layer on the generation of the MAC PDU. For example, if a MAC PDU includes zero MAC service data units (service data units, SDUs), and the MAC layer does not generate a MAC CE for this SL-SCH transmission, no data in the MAC PDU needs to be transmitted, and no MAC PDU is generated. In this embodiment of this application, because the SL-PRS is transmitted, and the SL-PRS is transmitted in the shared resource pool, the first destination address needs to be indicated by using address information included in the MAC PDU subheader, for the second terminal apparatus to determine that the SL-PRS is information transmitted to the second terminal apparatus.

To enable the MAC layer to generate a MAC PDU, for example, for a case in which only an SL-PRS is transmitted, a MAC CE associated with the SL-PRS may be generated, and the MAC CE associated with the SL-PRS and the SL-PRS may be transmitted together. In this case, conditions under which the MAC layer is restricted from generating the MAC PDU include:
(1) there is no sidelink CSI reporting MAC CE generated for this PSSCH transmission;
(2) there is no sidelink DRX command MAC CE generated for this PSSCH transmission;
(3) there is no sidelink inter-terminal apparatus coordination request MAC CE generated for this PSSCH transmission;
(4) there is no sidelink inter-terminal device coordination information MAC CE generated for this PSSCH transmission;
(5) there is no MAC CE associated with the SL-PRS generated for this sidelink grant or this PSSCH transmission; and
(6) the MAC PDU includes zero MAC SDUs. The PSSCH is a physical layer channel corresponding to an SL-SCH.

For example, for a case in which only an SL-PRS is transmitted, a MAC PDU including only a MAC PDU subheader or a MAC PDU subheader and a padding bit may be generated, and the SL-PRS may be transmitted together with the MAC PDU including the MAC PDU subheader or the MAC PDU subheader and the padding bit. In this case, conditions under which the MAC layer is restricted from generating the MAC PDU include:
(1) there is no sidelink CSI reporting MAC CE generated for this PSSCH transmission;
(2) there is no sidelink DRX command MAC CE generated for this PSSCH transmission;
(3) there is no sidelink inter-terminal apparatus coordination request MAC CE generated for this PSSCH transmission;
(4) there is no sidelink inter-terminal apparatus coordination information MAC CE generated for this PSSCH transmission; and
(5) the MAC PDU includes zero MAC SDUs, and the MAC PDU is not associated with the SL-PRS.

In another implementation, when the first information is the SL-PRS, the first terminal apparatus transmits the SL-PRS to the second terminal apparatus in the first sidelink grant. In this example, the first sidelink grant is a sidelink grant in the dedicated resource pool, and the sidelink grant in the dedicated resource pool is used to transmit only the SL-PRS; and the information that needs to be transmitted to the first destination address includes the SL-PRS, the first destination address has the SL-PRS, or the information that is transmitted to the first destination address and that satisfies the transmission requirement of the first sidelink grant includes the SL-PRS. Specifically, the physical layer of the first terminal apparatus transmits the SL-PRS to the second terminal apparatus by using the first sidelink grant.

Optionally, before the first terminal apparatus transmits, to the second terminal apparatus, the first information and/or the data packet corresponding to the first information, when the first destination address has the SL-PRS and the first information is not the SL-PRS, the first terminal apparatus determines whether to transmit the SL-PRS in the first sidelink grant. Specifically, the MAC layer of the first terminal apparatus determines whether to transmit the SL-PRS in the first sidelink grant. That the first destination address has the SL-PRS may be understood as that the information that needs to be transmitted to the first destination address includes the SL-PRS, or the information that is transmitted to the first destination address and that satisfies the transmission requirement of the first sidelink grant includes the SL-PRS. When the first destination address has the SL-PRS and the first information is not the SL-PRS, the priority of the first information is higher than the priority of the SL-PRS, and the first information is the MAC CE or the logical channel.

In an implementation, when the first destination address has the SL-PRS and the first information is not the SL-PRS, it is determined to transmit the SL-PRS in the first sidelink grant. In this implementation, if the first destination address has a requirement for transmitting the SL-PRS, the MAC layer of the first terminal apparatus determines to transmit the SL-PRS in the first sidelink grant.

For example, when the first destination address has the SL-PRS and the first information is not the SL-PRS, the MAC layer of the first terminal apparatus notifies the physical layer of the first terminal apparatus that the SL-PRS needs to be transmitted. The MAC layer determines, based on the priority of the SL-PRS, the quantity of time-domain symbols occupied by the SL-PRS, so that the physical layer determines, after considering that a transmission resource occupied by the SL-PRS is removed, the TBS that can be further carried in the first sidelink grant. Alternatively, the physical layer of the first terminal apparatus determines the quantity of symbols occupied by the SL-PRS, and determines, after considering that a transmission resource occupied by the SL-PRS is removed, the TBS that can be further carried in the first sidelink grant. The MAC layer selects, based on the TBS determined by the physical layer, the logical channel and/or the MAC CE that satisfy/satisfies the transmission requirement, to prepare for the packet assembly of the MAC PDU. The logical channel and/or the MAC CE that satisfy/satisfies the transmission requirement include/includes the first information. Optionally, when a size of a transmission resource occupied by both the first information and the SL-PRS is less than the size of the transmission resource of the first sidelink grant, and the first destination address further has information other than the first information and the SL-PRS, the logical channel and/or the MAC CE that satisfy/satisfies the transmission requirement may further include the other information. For more information, refer to the manner of generating the data packet when the first information is the SL-PRS.

In another implementation, when the first destination address has the SL-PRS and the first information is not the SL-PRS, it is determined not to transmit the SL-PRS in the first sidelink grant. Specifically, if the priority of the first information is higher than or equal to the priority of the SL-PRS, the MAC layer of the first terminal apparatus determines not to transmit the SL-PRS in the first sidelink grant; or if the priority of the SL-PRS is higher than or equal to the priority of the first information, the MAC layer of the first terminal apparatus determines to transmit the SL-PRS in the first sidelink grant. In this implementation, because the priority of the first information is higher than the priority of the SL-PRS, the MAC layer of the first terminal apparatus determines not to transmit the SL-PRS in the first sidelink grant. For more information, refer to the manner of generating the data packet when the first information is the SL-PRS.

In another implementation, when the first destination address has the SL-PRS and the first information is not the SL-PRS, it is determined, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

For example, it is determined to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or it is determined not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than or equal to the size of the transmission resource of the first sidelink grant. The information whose priority is higher than the priority of the SL-PRS in the first destination address may be understood as the information whose priority is higher than the priority of the SL-PRS in the information that needs to be transmitted to the first destination address. For example, the physical layer can provide a transport block size (denoted as a TBS 1) that can be supported when the transmission resource of the first sidelink grant is not used to transmit the SL-PRS and a transport block size (denoted as a TBS 2) that can be supported when the transmission resource of the first sidelink grant is used to transmit the SL-PRS. If a packet assembly size of the information whose priority is higher than that of the SL-PRS in the first destination address is greater than or equal to the TBS 1, it is determined that the SL-PRS is not transmitted in the first sidelink grant; or if a packet assembly size of the information whose priority is higher than that of the SL-PRS in the first destination address is greater than or equal to the TBS 2, it is determined that the SL-PRS is transmitted in the first sidelink grant.

Optionally, when the first destination address has the SL-PRS, the first information is not the SL-PRS, and it is determined to transmit the SL-PRS in the first sidelink grant, the data packet corresponding to the first information and the SL-PRS are transmitted to the second terminal apparatus in the first sidelink grant. Specifically, the MAC layer of the first terminal apparatus forms a MAC PDU by using the data packet corresponding to the first information, and delivers the MAC PDU to the physical layer of the first terminal apparatus. The physical layer of the first terminal apparatus transmits the MAC PDU and the SL-PRS to the second terminal apparatus by using the first sidelink grant. For example, when a size of a transmission resource occupied by both the first information and the SL-PRS is less than the size of the transmission resource of the first sidelink grant, and the first destination address further has information other than the first information and the SL-PRS, the other information that satisfies the transmission requirement may be further transmitted to the second terminal apparatus in the first sidelink grant. For more information, refer to the manner of generating the data packet when the first information is the SL-PRS.

Optionally, when the first destination address has the SL-PRS, the first information is not the SL-PRS, and it is determined not to transmit the SL-PRS in the first sidelink grant, the data packet corresponding to the first information is transmitted to the second terminal apparatus in the first sidelink grant. Specifically, the MAC layer of the first terminal apparatus forms a MAC PDU by using the data packet corresponding to the first information, and delivers the MAC PDU to the physical layer of the first terminal apparatus. The physical layer of the first terminal apparatus transmits the MAC PDU to the second terminal apparatus by using the first sidelink grant. For example, when a size of a transmission resource occupied by the first information is less than the size of the transmission resource of the first sidelink grant, and the first destination address further has information other than the first information and the SL-PRS, the other information that satisfies the transmission requirement may be further transmitted to the second terminal apparatus in the first sidelink grant. For more information, refer to the manner of generating the data packet when the first information is the SL-PRS.

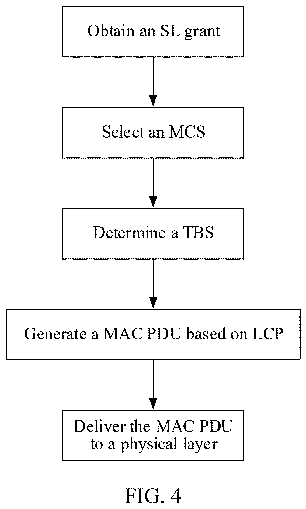

In another implementation, when the first information is not the SL-PRS, and the first destination address does not have the SL-PRS, the first terminal apparatus determines that the first sidelink grant is not used to transmit the SL-PRS. The MAC layer selects an MCS associated with the first sidelink grant, and indicates the MCS to the physical layer. The physical layer calculates a TBS based on the MCS selected by the MAC layer, and then notifies the MAC layer of the TBS. The MAC layer selects the logical channel based on logical channel prioritization (logical channel prioritization, LCP). The MAC layer performs packet assembly of the MAC PDU based on the obtained TBS and the priority order of the logical channels. For a specific generation manner, refer to a manner in section 5.22.1.4.1.3 in TS 38.321. FIG. 4 is a schematic flowchart of performing packet assembly of a MAC PDU based on a priority of a logical channel.

Based on the foregoing technical solution, a first terminal apparatus may determine, based on a priority of an SL-PRS, a MAC CE, and/or a logical channel, a first destination address associated with a first sidelink grant, and transmit information to the first destination address based on a requirement, to determine whether to transmit the SL-PRS in the first sidelink grant and whether to transmit a data packet in the first sidelink grant, so that a transmission manner of the information in the first sidelink grant can be determined.

With reference to specific examples, the following describes an information transmission method provided in embodiments of this application.

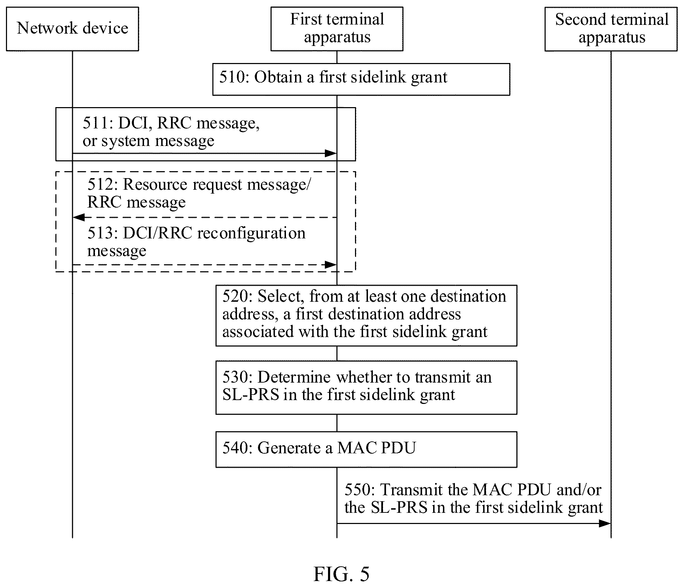

FIG. 5 is an interaction flowchart of an example of an information transmission method according to an embodiment of this application.

510: A first terminal apparatus obtains a first sidelink grant. Specifically, a MAC layer of the first terminal apparatus obtains the first sidelink grant.

In an implementation, a network device sends DCI to the first terminal apparatus, where the DCI indicates the first sidelink grant, as shown in step 511. Correspondingly, the first terminal apparatus receives the DCI from the network device, and determines the first sidelink grant.

In another implementation, a network device sends an RRC message or a system message to the first terminal apparatus, where the RRC message or the system message carries configuration information, and the configuration information indicates the first sidelink grant, as shown in step 511. Correspondingly, the first terminal apparatus receives the RRC message or the system message from the network device, and determines the first sidelink grant based on the configuration information. For example, the configuration information includes resource pool information for sidelink transmission. The first terminal apparatus determines a sidelink transmission resource pool based on the received resource pool information, and determines the first sidelink grant through resource selection. For another example, the configuration information may further include periodicity information of the first sidelink grant, to indicate that a sidelink transmission resource indicated by the first sidelink grant periodically occurs. The first terminal apparatus determines the first sidelink grant based on the received periodicity information of the first sidelink grant. Optionally, the first sidelink grant received by the first terminal apparatus is in an inactive state, and can be used only after an activation command sent by the network device is subsequently received.

In another implementation, the first terminal apparatus obtains the first sidelink grant from a preconfigured resource pool.

In another implementation, the first terminal apparatus sends a resource request message to a network device, where the resource request message is for requesting to obtain a sidelink grant available for transmission of an SL-PRS, and the resource request message may be a MAC CE or an RRC message, as shown in step 512; the network device receives the resource request message from the first terminal apparatus, and sends DCI to the first terminal apparatus, where the DCI indicates the first sidelink grant, as shown in step 513; and the first terminal apparatus receives the DCI from the network device, and determines the first sidelink grant based on the DCI.

In another implementation, the first terminal apparatus sends a resource request message to a network device, where the resource request message is for requesting to activate or deactivate a sidelink grant that has been configured for transmission of an SL-PRS, and the resource request message may be a MAC CE or an RRC message, as shown in step 512; the network device receives the resource request message from the first terminal apparatus, and sends DCI to the first terminal apparatus, where the DCI indicates to activate or deactivate the first sidelink grant, as shown in step 513; and the first terminal apparatus receives the DCI from the network device, and determines the first sidelink grant based on the DCI.

In another implementation, the first terminal apparatus sends an RRC message to a network device, where the RRC message is for requesting to obtain a sidelink grant available for transmission of an SL-PRS, where for example, the RRC message may be UE assistance information, as shown in step 512; the network device receives the RRC message from the first terminal apparatus, and sends an RRC reconfiguration message to the first terminal apparatus, where fifth information carried in the RRC reconfiguration message indicates the first sidelink grant, as shown in step 513; and the first terminal apparatus receives the RRC reconfiguration message from the network device, and determines the first sidelink grant based on the fifth information carried in the RRC reconfiguration message.

Step 511 is an optional step, and is usually applicable to a mode 1 (mode 1) or a scheme 1 (scheme 1) that is based on network scheduling. Step 513 is an optional step, and is usually applicable to a mode 2 (mode 2) or a scheme 2 (scheme 2) that is based on resource selection of the terminal device. Step 512 is an optional step, and step 512 may be performed before step 511 or step 513. A sequence of step 511 and step 513 is not limited. Step 511 and step 513 may be performed simultaneously, step 511 is performed before step 513, or step 513 is performed before step 511. A sequence of step 511, step 512, step 513, and step 510 is not limited. If existing, step 511, step 512, and step 513 may be performed before step 510, may be performed after step 510, or may be performed simultaneously with step 510.

For more implementations, refer to the implementations in which the first terminal apparatus obtains the first sidelink grant in the embodiment in FIG. 3.

520: The MAC layer of the first terminal apparatus selects, from at least one destination address, a first destination address associated with the first sidelink grant, where the first destination address has first information with a highest priority in the at least one destination address, and one of the at least one destination address has an SL-PRS, or one of the at least one destination address has an SL-PRS and second information, where the second information includes one or two of a MAC CE and a logical channel. For example, the first terminal apparatus determines, based on presence of SL-PRS transmission to be performed in the first sidelink grant obtained in step 510, that the at least one destination address has the SL-PRS. The destination address in the at least one destination address may further have the MAC CE and/or the logical channel. This is not limited herein.

530: The MAC layer of the first terminal apparatus determines whether to transmit the SL-PRS in the first sidelink grant. When the first information is the SL-PRS, the first terminal apparatus transmits the SL-PRS in the first sidelink grant. When the first destination address has the SL-PRS and the first information is not the SL-PRS, the first terminal apparatus determines whether to transmit the SL-PRS in the first sidelink grant. For a specific implementation, refer to step 420 in the embodiment in FIG. 4. Details are not described herein again.

540: The MAC layer of the first terminal apparatus generates a MAC PDU based on the information that is determined to be transmitted in the first sidelink grant. Step 540 is an optional step. For example, when the first sidelink grant is a dedicated resource pool, no MAC PDU is generated.

550: The MAC layer of the first terminal apparatus delivers the formed MAC PDU to a physical layer of the first terminal apparatus, and the physical layer of the first terminal apparatus transmits the MAC PDU and/or the SL-PRS to a second terminal apparatus in the first sidelink grant. For example, the physical layer of the first terminal apparatus transmits the SL-PRS to the second terminal apparatus in the first sidelink grant.

When the terminal apparatus performs sidelink transmission, because the sidelink grant is a resource selected by the terminal apparatus from the resource pool, the network device cannot learn of sending time of the terminal apparatus in a sidelink. At the same time, the terminal apparatus may also be scheduled by the network device to perform uplink transmission. Some terminal apparatuses do not have a capability of simultaneously performing transmission over an uplink and a sidelink. Therefore, when uplink transmission and sidelink SL-PRS transmission coexist, how to resolve a current transmission conflict is a problem that needs to be resolved.

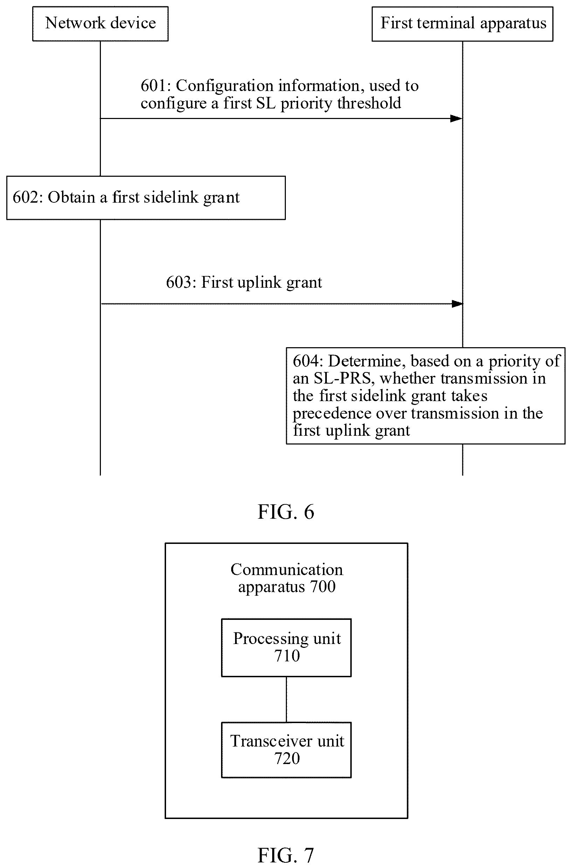

FIG. 6 is an interaction flowchart of another example of an information transmission method according to an embodiment of this application. In this example, when uplink transmission and sidelink SL-PRS transmission coexist, whether transmission in a first sidelink grant takes precedence over transmission in a first uplink grant may be determined based on a priority of an SL-PRS in a first destination address, to resolve a conflict between uplink transmission and sidelink SL-PRS transmission.

601: A network device sends configuration information to a first terminal apparatus, where the configuration information is used to configure a first SL priority threshold. Correspondingly, the first terminal apparatus receives the configuration information from the network device.

602: The first terminal apparatus obtains a first sidelink grant, where the first sidelink grant is used to transmit an SL-PRS to a first destination address. For a specific method, refer to the method for obtaining the first sidelink grant in the embodiment in FIG. 3.

603: The network device sends a first uplink grant to the first terminal apparatus. Correspondingly, the first terminal apparatus receives the first uplink grant from the network device. Optionally, the first terminal apparatus does not have a capability of simultaneously using the first uplink grant and the first sidelink grant. Optionally, sending time corresponding to the first uplink grant is the same as or close to sending time corresponding to the first sidelink grant.

604: The first terminal apparatus determines, based on a priority of the SL-PRS, whether transmission in the first sidelink grant takes precedence over transmission in the first uplink grant. For a method for determining to transmit the SL-PRS in the first sidelink grant, refer to the descriptions in the embodiment in FIG. 3 or the embodiment in FIG. 5.

Specifically, the first terminal apparatus determines, based on a result of comparison between the priority of the SL-PRS and the first SL priority threshold, whether the transmission in the first sidelink grant takes precedence over the transmission in the first uplink grant. For example, when the priority of the SL-PRS transmitted in the first sidelink grant is higher than or equal to the first SL priority threshold, it is determined that the transmission in the first sidelink grant takes precedence over the transmission in the first uplink grant. For example, if the priority of the SL-PRS in the first destination address is lower than or equal to the first SL priority threshold, it is determined that the transmission in the first uplink grant takes precedence over the transmission in the first sidelink grant, or it is determined that the transmission in the first sidelink grant does not take precedence over the transmission in the first uplink grant.

The foregoing describes the information transmission methods provided in embodiments of this application. The following describes an entity for performing the foregoing information transmission methods.

FIG. 7 is a block diagram of a communication apparatus 700 according to an embodiment of this application. The apparatus may be used or deployed in the first terminal apparatus in the method embodiment in FIG. 3. The communication apparatus 700 includes:
a processing unit 710, configured to select, from at least one destination address, a first destination address associated with a first sidelink grant, where the first destination address has first information with a highest priority in the at least one destination address, and one of the at least one destination address has a sidelink positioning reference signal SL-PRS, or one of the at least one destination address has an SL-PRS and second information, where the second information includes one or two of a media access control control element MAC CE and a logical channel; and
a transceiver unit 720, configured to transmit, to a second terminal apparatus in the first sidelink grant, the first information and/or a data packet corresponding to the first information, where an address of the second terminal apparatus is the first destination address. The transceiver unit in this embodiment of this application includes a receiving unit and a sending unit. The receiving unit and the sending unit may belong to a same module or different modules.

Optionally, the processing unit 710 is further configured to determine, when the first destination address has the SL-PRS and the first information is not the SL-PRS, whether to transmit the SL-PRS in the first sidelink grant.

Optionally, when the first destination address has the SL-PRS and the first information is not the SL-PRS, the processing unit 710 is specifically configured to determine to transmit the SL-PRS in the first sidelink grant.

Optionally, when the first destination address has the SL-PRS and the first information is not the SL-PRS, the processing unit 710 is specifically configured to determine not to transmit the SL-PRS in the first sidelink grant.

Optionally, when the first destination address has the SL-PRS and the first information is not the SL-PRS, the processing unit 710 is specifically configured to determine, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

Optionally, the processing unit 710 is specifically configured to:
determine to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or
determine not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than the size of the transmission resource of the first sidelink grant.

Optionally, the transceiver unit 720 is specifically configured to:
when the first destination address has the SL-PRS, the first information is not the SL-PRS, and it is determined to transmit the SL-PRS in the first sidelink grant, transmit, to the second terminal apparatus in the first sidelink grant, the data packet corresponding to the first information and the SL-PRS; or
when the first destination address has the SL-PRS, the first information is not the SL-PRS, and it is determined not to transmit the SL-PRS in the first sidelink grant, transmit, to the second terminal apparatus in the first sidelink grant, the data packet corresponding to the first information; or
when the first information is the SL-PRS, transmit, to the second terminal apparatus in the first sidelink grant, the SL-PRS and a data packet corresponding to third information, where the third information includes a part or entirety of information other than the SL-PRS in the first destination address; or
when the first information is the SL-PRS, transmit, to the second terminal apparatus in the first sidelink grant, the SL-PRS and a data packet corresponding to the SL-PRS; or
when the first information is the SL-PRS, transmit the SL-PRS to the second terminal apparatus in the first sidelink grant.

Optionally, the data packet corresponding to the SL-PRS does not include a MAC service data unit SDU or a MAC CE; or the data packet corresponding to the SL-PRS includes a MAC protocol data unit PDU subheader; or the data packet corresponding to the SL-PRS includes a MAC PDU subheader and a padding bit; or the data packet corresponding to the SL-PRS includes a MAC CE associated with the SL-PRS.

Optionally, the transceiver unit 720 is further configured to obtain the first sidelink grant.

Optionally, the transceiver unit 720 is specifically configured to receive configuration information from a network device, where the configuration information indicates the first sidelink grant.

Optionally, the configuration information includes one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant; or
information about a quantity of time-domain symbols occupied by an SL-PRS whose transmission is supported by the first sidelink grant.

Optionally, the transceiver unit 720 is specifically configured to:
send fourth information to a network device, where the fourth information is for requesting to obtain a sidelink grant available for transmission of an SL-PRS; and
receive fifth information from the network device, where the fifth information indicates the first sidelink grant.

Optionally, the fifth information includes one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
information about a quantity of time-domain symbols occupied by an SL-PRS whose transmission is supported by the first sidelink grant; or
experience requirement information of a positioning service supported by the first sidelink grant.

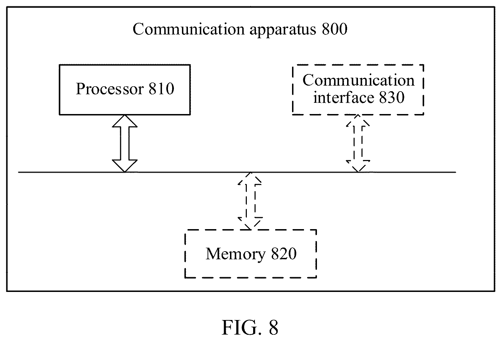

FIG. 8 is a block diagram of another communication apparatus 800 according to an embodiment of this application. The communication apparatus 800 includes at least one processor 810, a memory 820, and a communication interface 830. The at least one processor is connected to the memory 820.

The memory 820 is configured to store a computer program or executable instructions.

The processor 810 is coupled to the memory 820 through the communication interface 830. The processor 810 is configured to: invoke and run the computer program or the executable instructions in the memory 820, to implement the methods in embodiments of this application. The communication apparatus may be used in the first terminal apparatus or the network device in embodiments of this application. Optionally, the processor 810 and the memory 820 are integrated together.

The processor 810 may be an integrated circuit chip and has a signal processing capability. During implementation, the steps in the foregoing method embodiments may be completed by using a hardware integrated logic circuit in the processor or instructions in a form of the software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication apparatus. The communication apparatus includes an input/output interface and a logic circuit. The input/output interface is configured to: obtain input information and/or output information. The logic circuit is configured to: perform the methods in the foregoing method embodiments, and process and/or generate the output information based on the input information.

An embodiment of this application further provides a communication system, including the first terminal apparatus in the information transmission method provided in embodiments of this application, another communication device communicating with the first terminal apparatus, a network device, and another communication device communicating with the network device.

An embodiment of this application further provides a computer-readable storage medium. The computer-readable storage medium stores computer code or instructions for implementing the method in the foregoing method embodiments. When the computer code or the instructions are run by a processor, a computer is caused to implement the methods in the foregoing method embodiments.

An embodiment of this application further provides a computer program product. The computer program product includes computer code or instructions. When the computer code or the instructions are executed, the methods in the foregoing method embodiments are implemented.

An embodiment of this application further provides a chip, including a processor. The processor is connected to a memory, the memory is configured to store computer code or instructions, and the processor is configured to execute the computer code or the instructions stored in the memory, to cause the chip to perform the methods in the foregoing method embodiments.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different terminal apparatuses or different information, and do not constitute a limitation on the scope of embodiments of this application. Embodiments of this application are not limited thereto.

In addition, the term "and/or" in this application describes only an association relationship between associated objects and indicates that three relationships may exist. For example, A and/or B may represent the following three cases: Only A exists, both A and B exist, and only B exists. In addition, the character "/" in this specification usually indicates an "or" relationship between the associated objects. The term "at least one" in this application may represent "one" and "two or more". For example, A, B, and C may indicate the following seven cases: Only A exists, only B exists, only C exists, both A and B exist, both A and C exist, both C and B exist, and A, B and C all exist.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solution of this application essentially, or the part contributing to the conventional technology, or some of the technical solution may be implemented in a form of a software product. The computer software product is stored in a storage medium, and includes several instructions for indicating a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, applied to a first terminal apparatus, and comprising:
selecting, from at least one destination address, a first destination address associated with a first sidelink grant, wherein the first destination address has first information with a highest priority in the at least one destination address, and one of the at least one destination address has a sidelink positioning reference signal SL-PRS, or one of the at least one destination address has an SL-PRS and second information, wherein the second information comprises one or two of a media access control control element MAC CE and a logical channel; and
transmitting, to a second terminal apparatus in the first sidelink grant, the first information and/or a data packet corresponding to the first information, wherein an address of the second terminal apparatus is the first destination address.

2. The method according to claim 1, wherein the method further comprises:
determining, when the first destination address has the SL-PRS and the first information is not the SL-PRS, whether to transmit the SL-PRS in the first sidelink grant.

3. The method according to claim 2, wherein the determining, when the first destination address has the SL-PRS and the first information is not the SL-PRS, whether to transmit the SL-PRS in the first sidelink grant comprises:
when the first destination address has the SL-PRS and the first information is not the SL-PRS, determining to transmit the SL-PRS in the first sidelink grant.

4. The method according to claim 2, wherein the determining, when the first destination address has the SL-PRS and the first information is not the SL-PRS, whether to transmit the SL-PRS in the first sidelink grant comprises:
when the first destination address has the SL-PRS and the first information is not the SL-PRS, determining not to transmit the SL-PRS in the first sidelink grant.

5. The method according to claim 2, wherein the determining, when the first destination address has the SL-PRS and the first information is not the SL-PRS, whether to transmit the SL-PRS in the first sidelink grant comprises:
when the first destination address has the SL-PRS and the first information is not the SL-PRS, determining, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

6. The method according to claim 5, wherein
determining to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or
determining not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than the size of the transmission resource of the first sidelink grant.

7. The method according to any one of claims 1 to 6, wherein transmitting, to the second terminal apparatus in the first sidelink grant, the first information and/or the data packet corresponding to the first information comprises:
when the first destination address has the SL-PRS, the first information is not the SL-PRS, and it is determined to transmit the SL-PRS in the first sidelink grant, transmitting, to the second terminal apparatus in the first sidelink grant, the data packet corresponding to the first information and the SL-PRS; or
when the first destination address has the SL-PRS, the first information is not the SL-PRS, and it is determined not to transmit the SL-PRS in the first sidelink grant, transmitting, to the second terminal apparatus in the first sidelink grant, the data packet corresponding to the first information; or
when the first information is the SL-PRS, transmitting, to the second terminal apparatus in the first sidelink grant, the SL-PRS and a data packet corresponding to third information, wherein the third information comprises a part or entirety of information other than the SL-PRS in the first destination address; or
when the first information is the SL-PRS, transmitting, to the second terminal apparatus in the first sidelink grant, the SL-PRS and a data packet corresponding to the SL-PRS; or
when the first information is the SL-PRS, transmitting the SL-PRS to the second terminal apparatus in the first sidelink grant.

8. The method according to claim 7, wherein
the data packet corresponding to the SL-PRS does not comprise a MAC service data unit SDU or a MAC CE; or
the data packet corresponding to the SL-PRS comprises a MAC protocol data unit PDU subheader; or
the data packet corresponding to the SL-PRS comprises a MAC PDU subheader and a padding bit; or
the data packet corresponding to the SL-PRS comprises a MAC CE associated with the SL-PRS.

9. The method according to any one of claims 1 to 8, wherein the method further comprises:
obtaining the first sidelink grant.

10. The method according to claim 9, wherein the obtaining the first sidelink grant comprises:
receiving configuration information from a network device, wherein the configuration information indicates the first sidelink grant.

11. The method according to claim 10, wherein the configuration information comprises one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
periodicity information of the first sidelink grant; or
information about a quantity of time-domain symbols occupied by an SL-PRS whose transmission is supported by the first sidelink grant.

12. The method according to claim 9, wherein the obtaining the first sidelink grant comprises:
sending fourth information to a network device, wherein the fourth information is for requesting to obtain a sidelink grant available for transmission of an SL-PRS; and
receiving fifth information from the network device, wherein the fifth information indicates the first sidelink grant.

13. The method according to claim 12, wherein the fourth information or the fifth information comprises one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
information about a quantity of time-domain symbols occupied by an SL-PRS whose transmission is supported by the first sidelink grant;
index information corresponding to the first sidelink grant;
index information of a resource pool that the first sidelink grant is in; or
experience requirement information of a positioning service supported by the first sidelink grant.

14. A communication apparatus, comprising:
a processing unit, configured to select, from at least one destination address, a first destination address associated with a first sidelink grant, wherein the first destination address has first information with a highest priority in the at least one destination address, and one of the at least one destination address has a sidelink positioning reference signal SL-PRS, or one of the at least one destination address has an SL-PRS and second information, wherein the second information comprises one or two of a media access control control element MAC CE and a logical channel; and
a transceiver unit, configured to transmit, to a second terminal apparatus in the first sidelink grant, the first information and/or a data packet corresponding to the first information, wherein an address of the second terminal apparatus is the first destination address.

15. The apparatus according to claim 14, wherein
the processing unit is further configured to determine, when the first destination address has the SL-PRS and the first information is not the SL-PRS, whether to transmit the SL-PRS in the first sidelink grant.

16. The apparatus according to claim 15, wherein
when the first destination address has the SL-PRS and the first information is not the SL-PRS, the processing unit is specifically configured to determine to transmit the SL-PRS in the first sidelink grant.

17. The apparatus according to claim 15, wherein
when the first destination address has the SL-PRS and the first information is not the SL-PRS, the processing unit is specifically configured to determine not to transmit the SL-PRS in the first sidelink grant.

18. The apparatus according to claim 15, wherein
when the first destination address has the SL-PRS and the first information is not the SL-PRS, the processing unit is specifically configured to determine, based on a size of a transmission resource occupied by information whose priority is higher than a priority of the SL-PRS in the first destination address, a size of a transmission resource occupied by the SL-PRS, and a size of a transmission resource of the first sidelink grant, whether to transmit the SL-PRS in the first sidelink grant.

19. The apparatus according to claim 18, wherein the processing unit is specifically configured to:
determine to transmit the SL-PRS in the first sidelink grant if a sum of the size of the transmission resource occupied by the information whose priority is higher than the priority of the SL-PRS in the first destination address and the size of the transmission resource occupied by the SL-PRS is less than or equal to the size of the transmission resource of the first sidelink grant; or
determine not to transmit the SL-PRS in the first sidelink grant if a sum of the size of the transmission resource occupied by the information whose priority is higher than the priority of the SL-PRS in the first destination address and the size of the transmission resource occupied by the SL-PRS is greater than the size of the transmission resource of the first sidelink grant.

20. The apparatus according to any one of claims 14 to 19, wherein the transceiver unit is specifically configured to:
when the first destination address has the SL-PRS, the first information is not the SL-PRS, and it is determined to transmit the SL-PRS in the first sidelink grant, transmit, to the second terminal apparatus in the first sidelink grant, the data packet corresponding to the first information and the SL-PRS; or
when the first destination address has the SL-PRS, the first information is not the SL-PRS, and it is determined not to transmit the SL-PRS in the first sidelink grant, transmit, to the second terminal apparatus in the first sidelink grant, the data packet corresponding to the first information; or
when the first information is the SL-PRS, transmit, to the second terminal apparatus in the first sidelink grant, the SL-PRS and a data packet corresponding to third information, wherein the third information comprises a part or entirety of information other than the SL-PRS in the first destination address; or
when the first information is the SL-PRS, transmit, to the second terminal apparatus in the first sidelink grant, the SL-PRS and a data packet corresponding to the SL-PRS; or
when the first information is the SL-PRS, transmit the SL-PRS to the second terminal apparatus in the first sidelink grant.

21. The apparatus according to claim 20, wherein
the data packet corresponding to the SL-PRS does not comprise a MAC service data unit SDU or a MAC CE; or
the data packet corresponding to the SL-PRS comprises a MAC protocol data unit PDU subheader; or
the data packet corresponding to the SL-PRS comprises a MAC PDU subheader and a padding bit; or
the data packet corresponding to the SL-PRS comprises a MAC CE associated with the SL-PRS.

22. The apparatus according to any one of claims 14 to 21, wherein
the transceiver unit is further configured to obtain the first sidelink grant.

23. The apparatus according to claim 22, wherein
the transceiver unit is specifically configured to receive configuration information from a network device, wherein the configuration information indicates the first sidelink grant.

24. The apparatus according to claim 23, wherein the configuration information comprises one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
periodicity information of the first sidelink grant; or
information about a quantity of time-domain symbols occupied by an SL-PRS whose transmission is supported by the first sidelink grant.

25. The apparatus according to claim 22, wherein the transceiver unit is specifically configured to:
send fourth information to a network device, wherein the fourth information is for requesting to obtain a sidelink grant available for transmission of an SL-PRS; and
receive fifth information from the network device, wherein the fifth information indicates the first sidelink grant.

26. The apparatus according to claim 25, wherein the fourth information or the fifth information comprises one or more of the following:
priority information of information whose transmission is supported by the first sidelink grant;
priority information of an SL-PRS whose transmission is supported by the first sidelink grant;
requested bandwidth information of an SL-PRS whose transmission is supported by the first sidelink grant;
information about a quantity of time-domain symbols occupied by an SL-PRS whose transmission is supported by the first sidelink grant;
index information corresponding to the first sidelink grant;
index information of a resource pool that the first sidelink grant is in; or
experience requirement information of a positioning service supported by the first sidelink grant.

27. A communication apparatus, comprising at least one processor, wherein the at least one processor is connected to a memory, the memory is configured to store a computer program, and the at least one processor is configured to execute the computer program stored in the memory, to cause the communication apparatus to perform the method according to any one of claims 1 to 13.

28. A computer-readable storage medium, comprising:
the computer-readable storage medium stores computer code or instructions, and
when the computer code or the instructions are run by a processor, the method according to any one of claims 1 to 13 is performed.

29. A computer program product, comprising computer code or instructions, wherein when the computer code or the instructions are executed, the method according to any one of claims 1 to 13 is implemented.
